(19) Europäisches Patentamt / European Patent Office / Office européen des brevets

(11) **EP 2 887 650 A1**

(12) **EUROPEAN PATENT APPLICATION**
published in accordance with Art. 153(4) EPC

(43) Date of publication:
**24.06.2015 Bulletin 2015/26**

(51) Int Cl.:
***H04N 7/00*** *(2011.01)*

(21) Application number: **13813479.6**

(86) International application number:
**PCT/KR2013/005862**

(22) Date of filing: **02.07.2013**

(87) International publication number:
**WO 2014/007518 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.07.2012 US 201261667033 P**

(71) Applicant: **Samsung Electronics Co., Ltd.**
**Suwon-si, Gyeonggi-do, 443-742 (KR)**

(72) Inventors:
• **KIM, Chan-yul**
**Bucheon-si**
**Gyeonggi-do 421-170 (KR)**
• **LEE, Tammy**
**Seoul 137-070 (KR)**
• **ALSHINA, Elena**
**Suwon-si**
**Gyeonggi-do 443-744 (KR)**

(74) Representative: **Appleyard Lees**
**15 Clare Road**
**Halifax HX1 2HY (GB)**

(54) **METHOD AND APPARATUS FOR ENCODING VIDEO AND METHOD AND APPARATUS FOR DECODING VIDEO DETERMINING INTER-PREDICTION REFERENCE PICTURE LIST DEPENDING ON BLOCK SIZE**

(57) Provided are a method of determining a reference image for inter-prediction and an inter-prediction method according to the method of determining a reference image for inter-prediction. The inter-prediction method includes: determining, when a current slice is a B slice, a reference picture list used by a current prediction unit from among prediction units included in a coding unit; and outputting, when a size of the current prediction unit is 4X8 or 8X4, inter-prediction index information of the current prediction unit indicating a reference picture list from among a L0 list and a L1 list, and when a size of the current prediction unit is not 4X8 or 8X4, the inter-prediction index information of the current prediction unit indicating a reference picture list from among a L0 list, a L1 list, and a bi-prediction list.

## FIG. 1A

EP 2 887 650 A1

**Description**

Technical Field

The present disclosure relates to video encoding and decoding involving inter-prediction.

Background Art

As hardware for reproducing and storing high resolution or high quality video content is being developed and supplied, a need for a video codec for effectively encoding or decoding the high resolution or high quality video content is increasing. In a conventional video codec, a video is encoded according to a limited encoding method based on a macroblock having a predetermined size.

A video codec reduces a data amount by using a prediction method by using a feature that images of a video have high correlation temporally and spatially. According to the prediction method, in order to predict a current image by using a neighboring image, image information is recorded by using a temporal distance or a spatial distance between images or a prediction error.

Disclosure of the Invention

Technical Problem

The present disclosure provides a method of determining a reference picture list for inter-prediction and an inter-prediction method according to the method.

The present disclosure also provides a video encoding method for efficiently encoding and transmitting reference picture list information and a video decoding method for obtaining and reading reference picture list information.

Technical Solution

According to an aspect of the present disclosure, there is provided a motion prediction method, the motion prediction method including: determining, when a current slice is a B slice, a reference picture list used by a current prediction unit from among prediction units included in a coding unit; and outputting, when a size of the current prediction unit is 4X8 or 8X4, inter-prediction index information of the current prediction unit indicating a reference picture list from among a L0 list and a L1 list, and when a size of the current prediction unit is not 4X8 or 8X4, the inter-prediction index information of the current prediction unit indicating a reference picture list from among a L0 list, a L1 list, and a bi-prediction list.

Advantageous Effects

According to a motion prediction method of one or more embodiments, when a size of a prediction unit is 4x8 or 8x4, symbol coding for indicating that a reference picture list for bi-directional inter-prediction is a bi-prediction list may be skipped. As an operation of transmitting unnecessary reference picture list-related information is skipped, a transmission bit amount may be reduced. Also, according to a motion compensation method of the embodiments, when a size of a prediction unit is 4x8 or 8x4, an operation of checking whether a reference picture list for bi-directional inter-prediction is a bi-prediction list or not is skipped, and thus, a data parsing operation may also be simplified.

Brief Description of the Drawings

The above and other features and advantages of the present disclosure will become more apparent by describing in detail exemplary embodiments thereof with reference to the attached drawings in which:

FIG. 1A is a block diagram illustrating a reference image determining apparatus according to one or more embodiments;
FIG. 1B is a flowchart illustrating a method of determining a reference image according to one or more embodiments;
FIG. 2A is a block diagram illustrating a motion prediction apparatus including a reference image determining apparatus according to one or more embodiments;
FIG. 2B is a flowchart illustrating a motion prediction method according to one or more embodiments;
FIG. 3A is a block diagram illustrating a motion compensation apparatus including a reference image determining apparatus according to one or more embodiments;

FIG. 3B is a flowchart illustrating a motion compensation method according to one or more embodiments;

FIG. 4 illustrates two exemplary embodiments of intra-prediction index information;

FIG. 5 is a block diagram illustrating a video encoding apparatus involving video prediction based on a coding unit having a tree structure according to one or more embodiments;

FIG. 6 is a block diagram illustrating a video decoding apparatus involving video prediction based on a coding unit having a tree structure according to one or more embodiments;

FIG. 7 is a diagram for describing a concept of coding units according to one or more embodiments;

FIG. 8 is a block diagram of an image encoder based on coding units according to one or more embodiments;

FIG. 9 is a block diagram of an image decoder based on coding units according to one or more embodiments;

FIG. 10 is a diagram illustrating deeper coding units according to depths, and partitions according to one or more embodiments;

FIG. 11 is a diagram for describing a relationship between a coding unit and transformation units, according to one or more embodiments;

FIG. 12 is a diagram for describing encoding information of coding units corresponding to a coded depth, according to one or more embodiments;

FIG. 13 is a diagram of deeper coding units according to depths, according to one or more embodiments;

FIGS. 14 through 16 are diagrams for describing a relationship between coding units, prediction units, and transformation units, according to one or more embodiments;

FIG. 17 is a diagram for describing a relationship between a coding unit, a prediction unit, and a transformation unit, according to encoding mode information of Table 1;

FIG. 18 illustrates a physical structure of a disk in which a program is stored, according to one or more embodiments;

FIG. 19 illustrates a disk drive for recording and reading a program by using a disk;

FIG. 20 illustrates an overall structure of a content supply system for providing a content distribution service, according to one or more embodiments;

FIGS. 21 and 22 illustrates an external structure and an internal structure of a mobile phone to which a video encoding method and a video decoding method according to embodiments of the present disclosure are applied;

FIG. 23 illustrates a digital broadcasting system, in which a communication system according to one or more embodiments is applied, according to one or more embodiments; and

FIG. 24 illustrates a network structure of a cloud computing system using a video encoding apparatus and a video decoding apparatus according to one or more embodiments.

Best mode for currying out the Invention

According to an aspect of the present disclosure, there is provided a motion prediction method, the motion prediction method including: determining, when a current slice is a B slice, a reference picture list used by a current prediction unit from among prediction units included in a coding unit; and outputting, when a size of the current prediction unit is 4X8 or 8X4, inter-prediction index information of the current prediction unit indicating a reference picture list from among a L0 list and a L1 list, and when a size of the current prediction unit is not 4X8 or 8X4, the inter-prediction index information of the current prediction unit indicating a reference picture list from among a L0 list, a L1 list, and a bi-prediction list.

The motion prediction method may further include: determining whether inter-prediction where the bi-prediction list including the L0 list and the L1 list is used for the current prediction unit is allowed with respect to a prediction unit of a 4X8 or 8X4 size in the current slice; and including bi-prediction restriction information indicating that inter-prediction where the bi-prediction list is used for the current prediction unit is not allowed with respect to the prediction unit of a 4X8 or 8X4 size, into a slice header of the current slice.

The outputting of inter-prediction index information of the current prediction unit may include outputting, when a size of the current prediction unit is 4X8 or 8X4, the inter-prediction index information indicating that a reference picture list for the current prediction unit is a reference picture list except the bi-prediction list.

In the outputting, when a size of the current prediction unit is 4X8 or 8X4, a binarization operation for information indicating that the reference picture list is a bi-prediction list may be skipped.

According to another aspect of the present disclosure, there is provided a motion compensation method, the motion compensation method including: obtaining, when a current slice is a B slice, inter-prediction index information indicated according to a type of a reference picture list to be used by a current prediction unit from among prediction units included in a coding unit; and determining, when a size of the current prediction unit is 4X8 or 8X4, a reference picture list of the current prediction unit based on the inter-prediction index information indicating that the reference picture list is one of a L0 list and a L1 list, and when a size of the current prediction unit is not 4X8 or 8X4, determining a reference picture list of the current prediction unit based on the inter-prediction index information indicating that the reference picture list is one of a L0 list, a L1 list, and a bi-prediction list.

The motion compensation method may further include: parsing bi-prediction restriction information indicating whether inter-prediction is allowed with respect to the prediction unit of a 4X8 or 8X4 size, from a slice header of the current slice; and determining whether inter-prediction where the bi-prediction list including the L0 list and the L1 list is used for the current prediction unit is allowed with respect to a prediction unit of a 4X8 or 8X4 size in the current slice based on the parsed bi-prediction restriction information.

In the obtaining the inter-prediction index information, when a size of the current prediction unit is 4X8 or 8X4, an operation of reading information indicating that the reference picture list is a bi-prediction list from a binarizatoin bit string parsed from the bitstream may be skipped.

The determining may include reading a reference picture list except the bi-prediction list from the inter-prediction index information when the size of the current prediction unit is 4X8 or 8X4, wherein when the size of the current prediction unit is 4X8 or 8X4, an operation of checking whether the inter-prediction index information indicates that the reference picture list is the bi-prediction list is skipped.

According to another aspect of the present disclosure, there is provided a motion prediction apparatus including: a motion prediction unit for determining, when a current slice is a B slice, a reference picture list to be used by a current prediction unit from among prediction units included in a coding unit and a reference block for the current prediction unit from among reconstructed images belonging to the reference picture list; and an inter-prediction information output unit for outputting, when a size of the current prediction unit is 4X8 or 8X4, inter-prediction index information of the current prediction unit indicating that the reference picture list is one of a L0 list and a L1 list, and when the size of the current prediction unit is not 4X8 or 8X4, inter-prediction index information of the current prediction unit indicating a reference picture list which is one of a L0 list, a L1 list, and a bi-prediction list.

According to another aspect of the present disclosure, there is provided a motion compensation apparatus including: an inter-prediction information obtaining unit for obtaining, when a current slice is a B slice, inter-prediction index information indicating a reference picture list according to a type of the reference picture list that is to be used by a current prediction unit from among prediction units included in a coding unit; and a motion compensation unit for determining, when a size of the current prediction unit is 4X8 or 8X4, a reference picture list of the current prediction unit based on the inter-prediction index information of the current prediction unit indicating that the reference picture list is one of a L0 list and a L1 list, and determining, when the size of the current prediction unit is not 4X8 or 8X4, a reference picture list of the current prediction unit based on the inter-prediction index information of the current prediction unit indicating that the reference picture list is of one of a L0 list, a L1 list, and a bi-prediction list, and performing motion compensation on the current prediction unit by using the determined reference picture list.

According to another aspect of the present disclosure, there is provided a computer readable recording medium having embodied thereon a computer program for executing the motion prediction method described above.

According to another aspect of the present disclosure, there is provided a computer readable recording medium having embodied thereon a computer program for executing the motion compensation method described above.

Mode for Invention

Expressions such as "at least one of," when preceding a list of elements, modify the entire list of elements and do not modify the individual elements of the list.

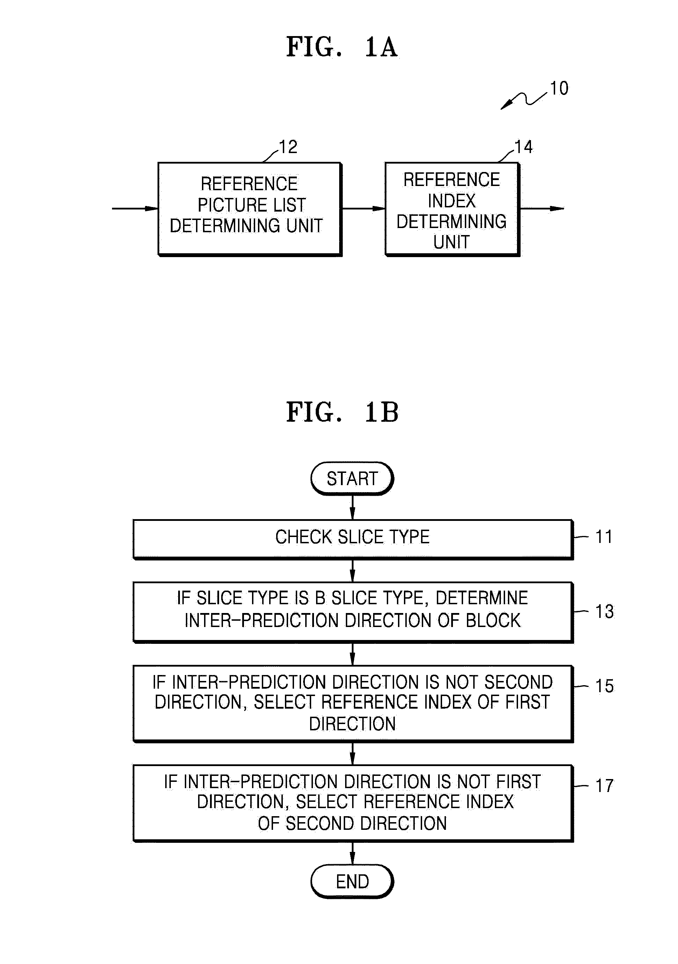

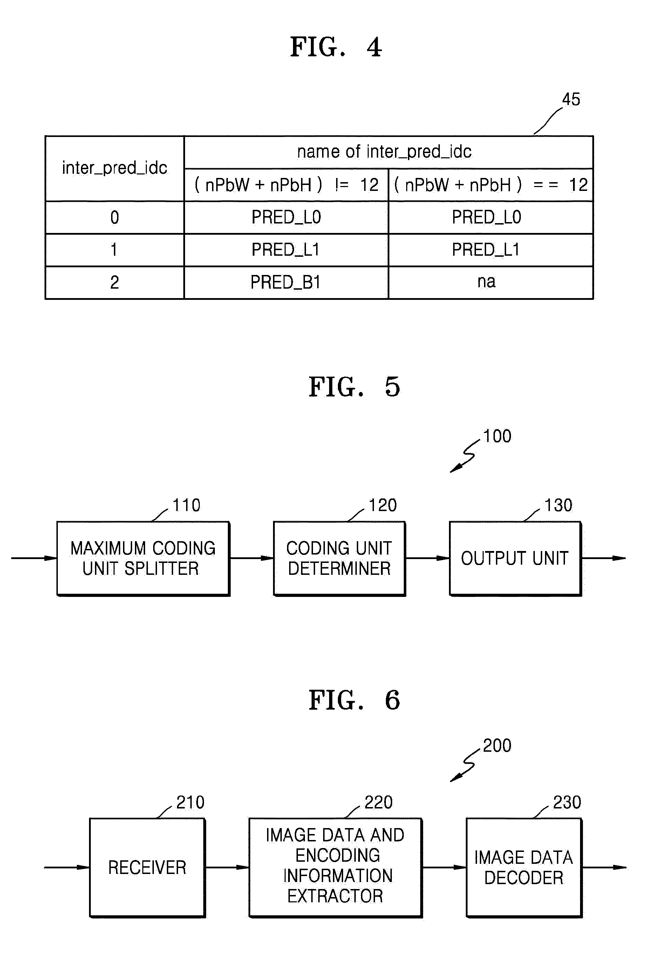

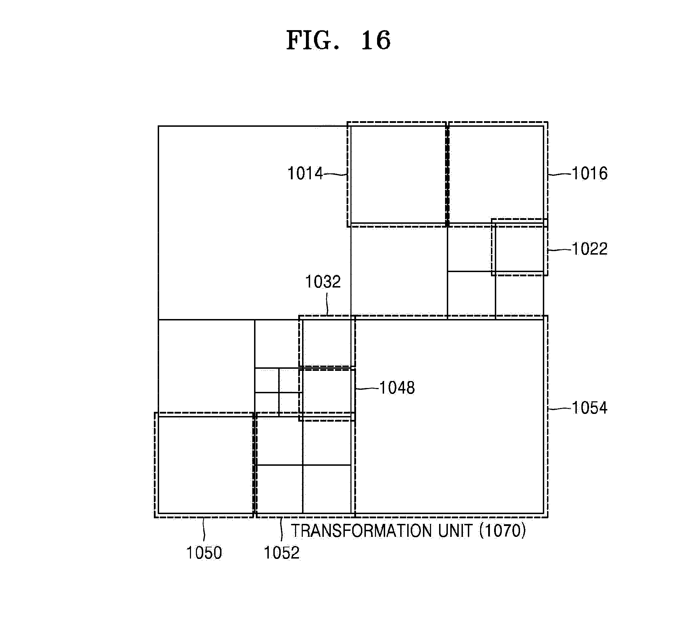

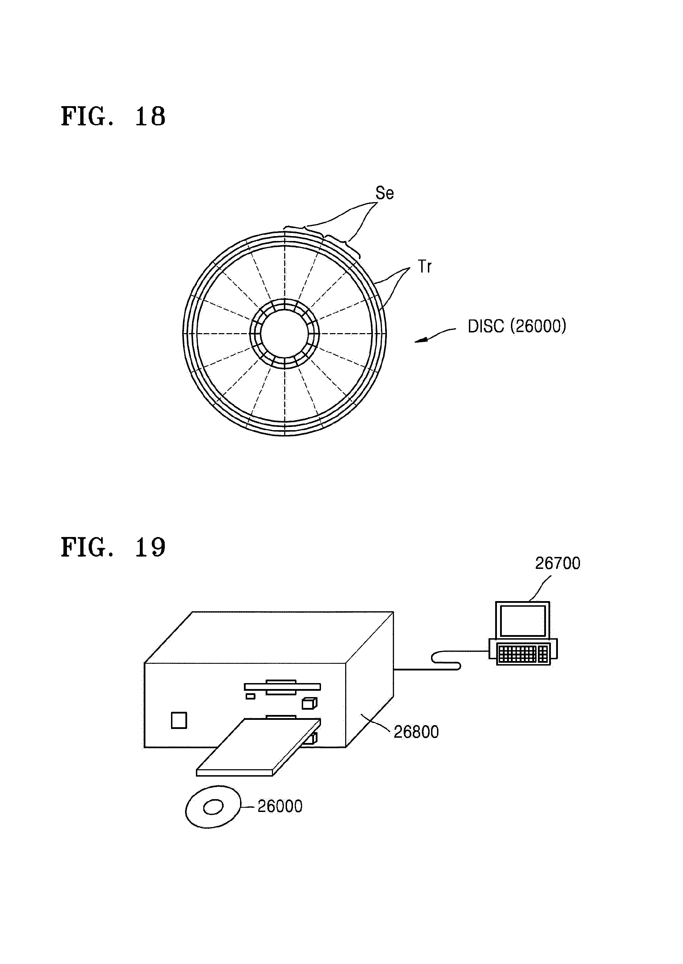

Hereinafter, a method and apparatus for determining a reference image for which unidirectional prediction or bi-directional prediction is possible according to one or more embodiments, and a method and apparatus for motion prediction according to the method and apparatus for determining, and a method and apparatus for motion compensation will be described with reference to FIGS. 1A through 4. Also, a video encoding apparatus and a video decoding apparatus according to one or more embodiments based on a coding unit having a tree structure according to one or more embodiments and a video encoding method and a video decoding method according to one or more embodiments will be described with reference to FIGS. 5 through 17. Also, embodiments in which the video encoding method and the video decoding method according to embodiments will be described with reference to FIGS. 18 through 24. Hereinafter, an 'image' may refer to a still image of a video or a moving image, that is, the video itself.

FIG. 1A is a block diagram illustrating a reference image determining apparatus 10 according to one or more embodiments. FIG. 1B is a flowchart illustrating a method of determining a reference image according to one or more embodiments.

The reference image determining apparatus 10 includes a reference picture list determining unit 12 and a reference index determining unit 14.

The reference image determining apparatus 10 may include a central processor (not shown) that controls the reference picture list determining unit 12 and the reference index determining unit 14 overall. Alternatively, the reference picture list determining unit 12 and the reference index determining unit 14 may be respectively operated by separate processors (not shown) included in each of the reference picture list determining unit 12 and the reference index determining unit 14, and the processors may cooperate with each other so as to operate the reference image determining apparatus 10. Alternatively, the reference picture list determining unit 12 and the reference index determining unit 14 may be controlled according to a control of an external processor (not shown) of the reference image determining apparatus 10.

The reference image determining apparatus 10 may include at least one data storing unit (not shown) in which input and output data of the reference picture list determining unit 12 and the reference index determining unit 14 is stored. The reference image determining apparatus 10 may include a memory control unit (not shown) that is in charge of data input and output of the data storing unit (not shown).

The reference image determining apparatus 10 determines a reference image used in temporal prediction of images of a video. The reference image determining apparatus 10 determines prediction information indicating a difference in positions of a current image and a reference image or a residue. Accordingly, image information may be recorded by using the prediction information instead of using the whole image data.

According to a temporal prediction encoding method, a current image may be predicted by referring to previous and subsequent images in terms of a reproduce time. It is regardless whether an image precedes or follows in terms of a reproduce time, images that are encoded or restored before the current image in regard to an encoding order or a decoding order may be referred to for prediction encoding of the current image. The current image and the reference image may be an image data unit including a picture, a frame, a field, a slice, or the like.

The reference image determining apparatus 10 may split the current image into a plurality of blocks for a quick calculation of inter-prediction, and may perform inter-prediction regarding the blocks. That is, among the plurality of blocks obtained by splitting the current image, for inter-prediction of the current image, one of the plurality of blocks obtained by splitting the current image may be referred to.

Inter-prediction for a B slice type image may include forward prediction and backward prediction. In the forward prediction, images having POC (Picture Order Count) numbers that precede the current image may be referred to to perform inter-prediction of the current image. In contrast, in the backward prediction, images having POC numbers that are after a POC number of the current image may be referred to to perform inter-prediction of the current image.

A reference picture list includes an index that indicates a reference image. A reference picture list according to one or more embodiments may be classified into a L0 list and a L1 list. The L0 list and the L1 list may each include a reference index indicating a reference image and information about a reference order. A basic effective number of reference images to be allocated to the reference picture list may be preset.

For example, the L0 list for List 0 prediction may include a reference index indicating reference images for forward prediction. However, if the number of reference images for forward prediction is smaller than the basic effective number of reference images set in the L0 list, the L0 list may further include a reference index indicating reference images for backward prediction.

For example, the L1 list for List 1 prediction may include a reference index indicating reference images for backward prediction. However, if the number of reference images for backward prediction is smaller than the basic effective number of reference images set in the L1 list, the L1 list may further include a reference index indicating reference images for forward prediction.

For inter-prediction of the current image, a reference image may be determined among at least one of reference picture lists of the L0 list and the L1 list. The reference picture list determining unit 12 may determine which reference picture list to use for inter-prediction of the B slice type current image.

For example, whether a current slice uses the L0 list or the L1 list may be determined. Also, for the current slice, bi-prediction in which a bi-prediction list including both the L0 list and the L1 list is used may be performed.

The reference image determining apparatus 10 may determine a reference order of reference images allocated to each reference picture list. For example, among the reference images allocated to the reference picture list, the reference order may be determined such that a reference image that is close to a current image in terms of a display order is referred to preferentially.

The reference picture list determining unit 12 may check a slice type of a slice including a block, and determine a reference picture list according to the slice type.

When a slice is a B slice type for which uni-prediction or bi-prediction is possible, the reference picture list determining unit 12 may determine a reference picture list of a block to be one of a L0 list, a L1 list, and a bi-prediction list. The reference picture list determining unit 12 may determine a reference picture list used in inter-prediction of a slice. The reference picture list may be determined to be one of the L0 list, the L1 list, and the bi-prediction list.

According to one or more embodiments, types of reference picture lists which may be used in inter-prediction may be limited according to a block size. For example, when a size of a block in B slice type is 4x8 or 8x4, inter-prediction that uses one reference picture list among a L0 list and a L1 list may be allowed. Inter-prediction that uses a bi-prediction list may not be allowed to a block in B slice type.

The reference index determining unit 14 may determine a reference index indicating a reference image from among the reference picture list based on the reference picture list.

For example, the reference index determining unit 14 may determine as a reference index for a block, a L0 reference index from the L0 list or a L1 reference index from a L1 list.

Hereinafter, an operation of determining a reference image by using the reference image determining apparatus 10 for inter-prediction will be described with reference to FIG. 1B.

In operation 11, the reference picture list determining unit 12 may check a slice type of a slice that includes a block. In operation 13, the reference picture list determining unit 12 may determine a reference picture list of a block to be one of a L0 list, a L1 list, and a bi-prediction list, if a current slice type is a B slice type.

In operation 15, if a reference picture list determined by the reference picture list determining unit 12 is not a L1 list, the reference index determining unit 14 may determine as a reference index for a block, a L0 reference index from a L0 list. That is, when the reference picture list is a L0 list or a bi-prediction list, at least one reference index may be selected from the L0 list.

If the reference picture list determined by the reference picture list determining unit 12 is a L1 list, a L0 reference index is not determined but the method proceeds to operation 17.

In operation 17, when the reference picture list determined by the reference picture list determining unit 12 is not a L0 list, the reference index determining unit 14 may determine a L1 reference index among the L1 list as a reference index for a block. That is, when the reference picture list is a L1 list or a bi-prediction list, at least one reference index may be selected from the L1 list.

Accordingly, when the reference picture list is a bi-prediction list, at least one L0 reference index may be determined from a L0 list, and at least one L1 reference index may be determined from a L1 list.

In operation 15, the reference index determining unit 14 may determine a L0 reference index and may also determine a differential value of first motion vector indicating a reference block in a reference image indicated by a L0 reference index.

In operation 17, the reference index determining unit 14 may determine a L1 reference index, and may also determine a differential value of second motion vector indicating a reference block in a reference image indicated by a L1 reference index.

A reference index indicates an order of reference images belonging to a reference picture list, and motion vector may indicate a position of a reference block in a predetermined reference image. Accordingly, based on the reference index and the motion vector, a reference image and a reference block for inter-prediction of a block may be determined.

The reference image determining apparatus 10 may use 2-bit inter-prediction index information as information indicating a reference picture list.

In order to perform context-based entropy encoding or entropy decoding regarding 2-bit inter-prediction index information according to one or more embodiments, a context model including probability information of a symbol indicating inter-prediction index information may be used. In particular, a context model is determined for each bin of a symbol, and thus, a context model for each of two bins respectively corresponding to 2 bits of inter-prediction information may be determined.

A first bin among bins of inter-prediction index information according to one or more embodiments may indicate whether a reference picture list is a single list or a bi-prediction list. When the first bin indicates bi-prediction list inter-prediction, a second bin does not have to be defined anymore. However, when the first bin indicates inter-prediction where a single reference picture list is used, a second list may indicate whether the single reference picture list is a L0 list or a L1 list.

According to one or more embodiments, when a sum of horizontal and vertical sizes of a block in B slice type is 12 as in a case of a block size of 4x8 or 8x4, inter-prediction where a bi-prediction list is used is not allowed. Thus, the inter-prediction index information of a block may indicate a L0 list or a L1 list. Only a reference picture list except a bi-prediction list may be determined as inter-prediction index information. Accordingly, as inter-prediction index information of a block, a bit string indicating L0 list prediction or L1 list prediction is determined, and a bit string indicating bi-prediction may not be determined.

When a sum of horizontal and vertical sizes of a block in B slice type is not 12, inter-prediction index information indicating one of L0 list prediction, L1 list prediction, bi-prediction may be determined with respect to the block in B slice type.

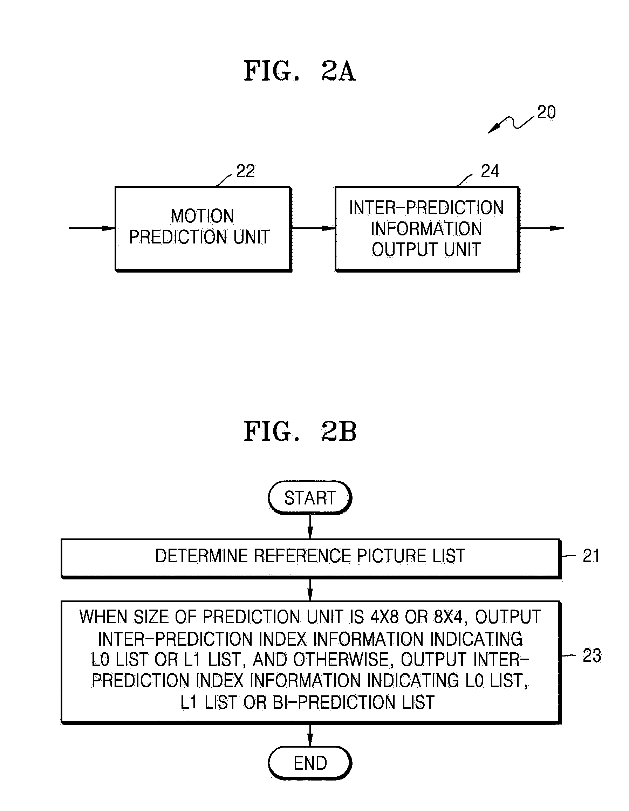

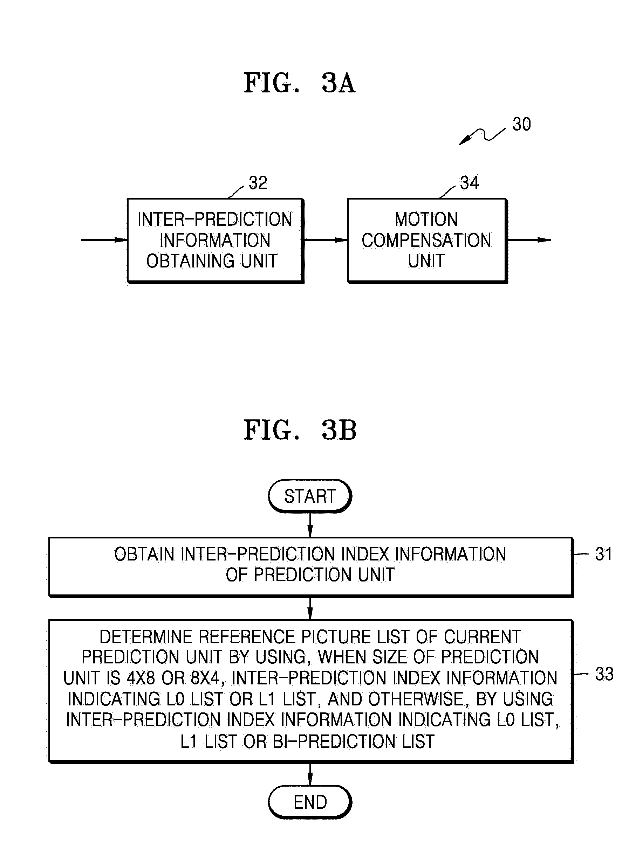

Hereinafter, an operation of performing motion prediction by using a reference picture determined by using the reference image determining apparatus 10 will be described with reference to FIGS. 2A and 2B. Also, an operation of performing motion compensation by using a reference picture determined by using the reference image determining apparatus 10 will be described with reference to FIGS. 3A and 3B.

FIG. 2A is a block diagram illustrating a motion prediction apparatus 20 including a reference image determining apparatus 10 according to one or more embodiments. FIG. 2B is a flowchart illustrating a motion prediction method according to one or more embodiments.

The motion prediction apparatus 20 includes a motion prediction unit 22 and an inter-prediction information output unit 24.

The motion prediction unit 22 may check a slice type of a current slice including a current block. The motion prediction unit 22 may determine a reference picture list that is to be used by a current block in inter-prediction when the current slice is a B slice.

The motion prediction unit 22 may perform motion prediction with respect to a block by using reference pictures belonging to at least one of a L0 list and a L1 list. The motion prediction unit 22 may determine a reference picture for a current block from among reference images allocated to the determined reference picture list.

The motion prediction unit 22 may determine a reference block for a current block from among reconstructed images belonging to the reference picture list. The motion prediction unit 22 may determine a similarity between blocks of a determined reference image and a current block of the current image to detect a block having a smallest error with respect to the current block. That is, the block similar as the current block may be detected by motion prediction, and the detected block may be determined as the reference block. Also, a picture including the detected reference block may be determined as a reference picture. When at least one reference block that is the most similar as the current block is determined, at least one reference picture may be determined.

The motion prediction unit 22 may generate a motion vector indicating a spatial distance between a current prediction unit and the reference block and residues indicating a difference between pixel values of the current prediction unit and the reference block.

The inter-prediction information output unit 24 may output reference index information indicating a reconstructed image that includes a reference block from among reconstructed images belonging to the reference picture list, motion vector difference information indicating a difference between a motion vector of the current prediction unit and a previous motion vector, and a residue.

The inter-prediction information output unit 24 may generate and output inter-prediction index information indicating a type of a reference picture list for a current block. For inter-prediction of the current block, inter-prediction index information indicating whether a L0 list, a L1 list, or a bi-prediction list is used may be output.

A current block where inter-prediction is performed may be referred to as a prediction unit. In operation 21, the motion prediction unit 22 may determine a reference list used by a current prediction unit from among prediction units when a current slice in which a coding unit is included is a B slice. As a reference list, a L0 list, a L1 list, or a bi-prediction list may be determined.

The motion prediction unit 22 may determine a size of a prediction unit, and may restrict types of a reference picture list that may be selected for inter-prediction according to a size of a prediction unit.

When a size of a current block is 4X8 or 8X4, an inter-prediction index of the current block may indicate a reference picture list which is one of a L0 list and a L1 list. When a size of a current block is not 4X8 or 8X4, an inter-prediction index of a current block may indicate a reference picture list which is one of a L0 list, a L1 list, and a bi-prediction list.

In operation 23, the inter-prediction information output unit 24 may output inter-prediction index information of a current prediction unit.

The inter-prediction index information output unit 24 may include inter-prediction index information indicating one of L0 prediction, L1 prediction, and bi-prediction, into a prediction unit field including prediction information of a block in a bitstream.

Also, if inter-prediction index information does not represent L1 prediction, the inter-prediction index information output unit 24 may include L0 reference index information and difference value information of a first motion vector into a prediction unit field.

As a reference block and a reference picture are determined by the motion prediction unit 22, information indicating a reference picture, for example, a number of a reference picture from among images belonging to the reference picture list, that is, a reference index may be determined. If the reference picture belongs to a L0 list, a L0 reference index may be determined, and if the reference picture belongs to a L1 list, a L1 reference index may be determined. The inter-prediction index information output unit 24 may generate and include reference index information into a prediction unit field.

The inter-prediction index information output unit 24 may include information generated as a result of inter-prediction, into a slice header and a prediction unit field, and may transmit a bitstream including the slice header and the prediction unit field.

The inter-prediction index information output unit 24 may entropy-encode inter-prediction index information by using a context model that is determined for each bin of the inter-prediction index information. The inter-prediction index information output unit 24 may transmit not only those various symbols that are generated as a result of the previous inter-prediction, that is, the inter-prediction index information but also a bit string that is generated by performing entropy-encoding on difference value information of a motion vector or reference index information or the like.

The motion prediction unit 22 may preset whether inter-prediction where a bi-prediction list including a L0 list and a L1 list is allowed with respect to a prediction unit of a 4X8 or 8X4 size in a current slice. In this case, the inter-prediction index information output unit 24 may include, into a slice header of a current slice, bi-prediction restriction information indicating that inter-prediction where a bi-prediction list is used with respect to a prediction unit of a 4X8 or 8X4 size is not allowed.

When a size of a current prediction unit is 4X8 or 8X4, the inter-prediction index information output unit 24 may output inter-prediction index information indicating that a reference picture list for the current prediction unit is a reference picture list except a bi-prediction list. Accordingly, when a size of a current prediction unit is 4X8 or 8X4, the inter-prediction index information output unit 24 may skip a binarization operation regarding information indicating that a reference picture list is a bi-prediction list.

Prediction information encoded by entropy-encoding may be included into a block area of a bitstream to be transmitted.

FIG. 3A is a block diagram illustrating a motion compensation apparatus 30 including a reference image determining apparatus 10 according to one or more embodiments. FIG. 3B is a flowchart illustrating a motion compensation method according to one or more embodiments.

The motion compensation apparatus 30 includes an inter-prediction information obtaining unit 32 and a motion compensation unit 34.

In general, in a video encoding process, motion prediction and motion compensation may be performed. Motion compensation may be performed also video decoding process. After motion prediction with respect to an original image is performed, in order to generate a reconstructed image that is the same as an original image through motion compensation, motion compensation has to be performed by using reference information and residues generated through motion prediction. Accordingly, for encoding and decoding of an inter-prediction mode block in a video encoding process and a video decoding process, information about reference information (reference index, motion vector) and residues has to be transmitted or received.

The inter-prediction information obtaining unit 32 may parse slice type information from a slice header from among the received bitstream. A slice type of a current slice may be determined by using the parsed slice type information.

The inter-prediction information obtaining unit 32 may obtain information about sizes of prediction units included in a coding unit. When the current slice in which the coding unit is included is a B slice, inter-prediction index information indicating a type of a reference list to be used by a current prediction unit from among prediction units may be further obtained.

When a size of a current prediction unit is 4X8 or 8X4, the motion compensation unit 34 may determine a reference picture list of a current prediction unit based on inter-prediction index information indicating one of a L0 list and a L1 list. When a size of a current prediction unit is not 4X8 or 8X4, the motion compensation unit 34 may determine a reference picture list of a current prediction unit based on inter-prediction index information indicating one of a L0 list, a L1 list, and a bi-prediction list.

The motion compensation unit 34 may perform motion compensation with respect to a current prediction unit by using the determined reference picture list.

In operation 31, when a current slice in which a coding unit is included is a B slice, the inter-prediction information obtaining unit 32 may obtain inter-prediction index information indicating a type of a reference list to be used by a current prediction unit from among prediction units. Among received bitstreams, inter-prediction index information indicating a reference picture list of a current block (prediction unit) may be parsed from a prediction unit field.

In operation 33, when a size of a current prediction unit is 4X8 or 8X4, the motion compensation unit 34 may determine a L0 list or a L1 list as a reference picture list to be used for current inter-prediction based on a prediction unit area.

In operation 33, when a size of a current prediction unit is not 4X8 or 8X4, the motion compensation unit 34 may determine one of a L0 list, a L1 list, and a bi-prediction list as a reference picture list to be used for current inter-prediction, based on inter-prediction index information.

The inter-prediction information obtaining unit 32 may parse, from a slice header of a current slice, bi-prediction restriction information indicating whether inter-prediction where the bi-prediction list is used is allowed with respect to a prediction unit of a 4X8 or 8X4 size.

The inter-prediction information obtaining unit 32 may anticipate whether inter-prediction index information indicating bi-prediction list prediction with respect to a prediction unit of a 4X8 or 8X4 size is to be parsed or not in a current slice, based on the parsed bi-prediction restriction information.

Also, the inter-prediction information obtaining unit 32 may determine whether to parse 2-bit inter-prediction index information or 1-bit inter-prediction index information of a prediction unit, based on the parsed bi-prediction restriction information.

If bi-prediction list prediction is restricted with respect to a prediction unit of a 4X8 or 8X4 size according to one or more embodiments, when a size of a current prediction unit is 4X8 or 8X4, the inter-prediction information obtaining unit 32 may skip an operation of reading information indicating that a reference picture list is a bi-prediction list from a binarization bit string parsed from a bitstream.

Accordingly, when a size of a current prediction unit is 4X8 or 8X4, the inter-prediction information obtaining unit 32 may determine a reference picture list except a bi-prediction list from inter-prediction index information. Accordingly, if a size of a current prediction unit is 4X8 or 8X4, the inter-prediction information obtaining unit 32 may skip an operation of checking whether inter-prediction index information indicates a bi-prediction list.

The inter-prediction information obtaining unit 32 may perform entropy-encoding in which a context model determined for each bin is used, with respect to a bit string including inter-prediction index information in a bitstream, thereby restoring inter-prediction index information.

The inter-prediction information obtaining unit 32 may parse, from the received bitstream, reference index information, a difference value of a motion vector, and residues for each block in an inter-prediction mode belonging to a slice.

The inter-prediction information obtaining unit 32 may further obtain a reference index that is determined based on a reference list indicated by an inter-prediction index and motion vector difference information. Also, the inter-prediction information obtaining unit 32 may obtain partition type information of a coding unit based on a size of a coding unit and partition type information so that sizes of prediction units included in the coding unit may be determined.

The motion compensation unit 34 may determine a reference image indicating a reference index of a current prediction unit from among first restored reference images based on the determined reference picture list. The motion compensation unit 34 may determine a reference image indicated by a reference index from the reference picture list. A motion vector of a current block is determined by using a difference value of a motion vector and a previous motion vector, and a reference block indicated by a motion vector may be determined from among blocks of the reference image. The motion compensation unit 34 may combine the current block and the reference block to compensate the reference block with a residue, thereby restoring the current block.

Accordingly, the motion compensation unit 34 may perform motion compensation by using a reference picture determined for each block, a motion vector, and residues to generate a reconstructed image.

The motion prediction apparatus 20 may express an image by using prediction information instead of the whole image data, and thus, the motion prediction apparatus 20 may be used in video encoding for performing video compression encoding which requires a reduction in a video data amount.

In detail, the motion prediction apparatus 20 may be included in or connected to a video encoder that encodes a video based on coding units that are obtained by splitting a video image into spatial domains to thereby perform inter-prediction for video encoding. Also, for inter-prediction on a coding unit, a coding unit is split into prediction units and partitions, and inter-prediction may be performed based on the prediction units and the partitions.

A coding unit according to one or more embodiments may include not only blocks having a fixedly set form but also coding units having a tree structure. According to one or more embodiments, coding units having a tree structure and prediction units and partitions in the coding units will be described in detail below with reference to FIGS. 5 through 17.

The motion prediction apparatus 20 may perform inter-prediction with respect to an image block or image data of a coding unit to output a prediction error with respect to a reference image, that is, a residue. The motion prediction apparatus 20 may generate a quantized transformation coefficient that is obtained by transforming and quantizing a residue, and perform entropy-encoding with respect to symbols of, for example, a transformation coefficient, reference information, and encoding information, to output a bitstream. The motion prediction apparatus 20 may also encode symbols including L0 list related information and L1 list related information that include a reference order of images belonging to each reference picture list or the number of images or reference picture list-related information such as information related to modification of a reference picture list and output the same.

The motion prediction apparatus 20 may also generate a reconstructed image by performing inverse quantization, inverse transformation, and prediction compensation on the transformation coefficient to restore an image of a spatial domain and performing loop filtering. That is, the motion prediction apparatus 20 may refer to the reconstructed image generated by using a video encoder by using at least one of a L0 list and a L1 list in order to perform inter-prediction with respect to a current image which is a B slice. The reconstructed image generated in this manner is used as a reference image for motion prediction of a next input image, and thus, the motion prediction apparatus 20 may determine reference information and residues through inter-prediction with respect to a next input image again.

Accordingly, video compression encoding may be performed through motion prediction is performed by using the motion prediction apparatus 20.

In order to output a video encoding result, the motion prediction apparatus 20 may operate in connection with an internally mounted video encoding processor or an external video encoding processor to thereby perform a video encoding operation including motion prediction. The internal video encoding processor of the motion prediction apparatus 20 may be implemented by an additional processor, and according to one or more embodiments, a central processing unit or a graphic calculating device may drive a video encoding processing module to perform a basic video encoding operation.

Next, a video decoding process will be described.

The motion compensation apparatus 30 according to one or more embodiments may receive a bitstream that is compressed through motion prediction to thereby restore an image by using prediction information instead of the whole image data.

The motion compensation apparatus 30 may parse from a block area of a bitstream a reference index indicating a reference picture for a current block, a motion vector, and a residue.

The motion compensation apparatus 30 may be included in or connected to a video decoder that decodes a video based on coding units that are obtained by splitting a video image into spatial domains to thereby perform motion compensation for video decoding. Also, a coding unit for motion compensation may include prediction units and partitions, and motion compensation may be performed based on the prediction units and the partitions. As described above, a coding unit according to one or more embodiments may include not only blocks having a fixedly set form but also coding units having a tree structure.

The motion compensation apparatus 30 may perform entropy-decoding with respect to a received bitstream to parse symbols of a transformation coefficient, reference information, encoding information, or the like. The motion compensation apparatus 30 may parse symbols including reference picture list-related information.

The motion compensation apparatus 30 may perform inverse quantization and inverse transformation on transformation coefficients that are parsed for each transformation unit to restore residues in a spatial domain.

The motion compensation apparatus 30 may restore an image of a spatial domain through motion compensation where a reference block is compensated by residues for each partition. For motion compensation of a current partition which is a B slice, the motion compensation apparatus 30 may refer to a first restored image included in at least one of a L0 list and a L1 list to determine a reference image and determine a reference block indicated by a motion vector from the reference image. By adding residues to the determined reference block, a reconstructed block may be generated.

The motion compensation apparatus 30 may perform deblocking filtering and sample adaptive offset (SAO) operation with respect to the reconstructed block of a spatial domain to thereby reduce an error between the reconstructed block and an original block. The reconstructed block may be used as a reference block for prediction of a next block.

Accordingly, video compression decoding may be performed after motion compensation of the motion compensation apparatus 30 is performed.

In order to output a video decoding result, the motion compensation apparatus 30 may operate in connection with an internally mounted video decoding processor or an external video decoding processor to thereby perform a video decoding operation including motion compensation. The internal video decoding processor of the motion compensation apparatus 30 may be implemented by an additional processor, and according to one or more embodiments, a central processing unit or a graphic calculating device may drive a video decoding processing module to thereby perform a basic video decoding operation.

Hereinafter, a syntax of inter-prediction-related information that is transmitted by the motion prediction apparatus 20 and is parsed by the motion compensation apparatus 30 will be described in detail with reference to FIG. 4.

FIG. 4 illustrates two exemplary embodiments of inter-prediction index information.

When a current image is a B slice type, inter-prediction index information inter_pred_idc 45 may indicate whether a reference picture list of a block in B slice type is a L0 list, a L1 list or a bi-prediction list.

nPbW and nPbH represent horizontal and vertical sizes of a current prediction unit, respectively. Accordingly, when a sum of horizontal and vertical sizes (nPbW+nPbH) of a prediction unit is 12 as in the case of prediction unit sizes of 4x8 or 8x4, bi-prediction list inter-prediction may not be allowed to a prediction unit of a B slice type. Accordingly, when a sum of the horizontal and vertical sizes is 12, inter-prediction index information 45 indicating one of L0 prediction Pred_L0 and L1 prediction Pred_L1 may be determined with respect to a prediction unit of a B slice type.

When a sum of horizontal and vertical sizes of a prediction unit is not 12, inter-prediction index information 45 indicating one of L0 prediction Pred_L0, L1 prediction Pred_L1, and bi-prediction Pred_BI may be determined.

Accordingly, when a sum of the horizontal and vertical sizes of the current prediction unit which is a B slice type is not 12, the motion prediction apparatus 20 may include inter-prediction index information 45 indicating one of L0 prediction Pred_L0, L1 prediction Pred_L1, and bi-prediction Pred_BI into a prediction unit field of a bitstream. However, when a sum of the horizontal and vertical sizes of the current prediction unit which is a B slice type is 12, the motion prediction apparatus 20 may encode inter-prediction index information 45 indicating one of L0 prediction Pred_L0 and L1 prediction Pred_L1 in a prediction unit field of a bitstream.

For example, when a sum of the horizontal and vertical sizes of the current prediction unit which is a B slice type is not 12, the motion prediction apparatus 20 may output, as inter-prediction index information 45, '00' indicating L0 prediction Pred_L0, '01' indicating L1 prediction Pred_L1, or '1' indicating bi-prediction Pred_BI. However, when a sum of the horizontal and vertical sizes of the current prediction unit which is a B slice type is 12, the motion prediction apparatus 20 may output, as inter-prediction index information 45, '0' indicating L0 prediction Pred_L0 or '1' indicating bi-prediction Pred_LI.

When inter-prediction index information 45 according to another embodiment of the present disclosure is parsed from a prediction unit field of a bistream and a sum of horizontal and vertical sizes of a current prediction unit is not 12, the motion compensation apparatus 30 may read one of L0 prediction Pred_L0, L1 prediction Pred_L1, and bi-prediction Pred_BI from the inter-prediction index information 45. However, when a sum of horizontal and vertical sizes of a current prediction unit is 12, one of L0 prediction Pred_L0, and L1 prediction Pred_L1, may be read from the inter-prediction index information 45.

For example, when a sum of horizontal and vertical sizes of a current prediction unit which is a B slice type is not 12, the motion compensation apparatus 30 may determine an inter-prediction mode as L0 prediction (Pred_L0) when the inter-prediction index information 45 is '00,' as L1 prediction Pred_L1 when the inter-prediction index information 45 is'01,' and as bi-prediction Pred_B1 when the inter-prediction index information 45 is '1.' When a sum of horizontal and vertical sizes of a current prediction unit is 12, the motion compensation apparatus 30 may determine an inter-prediction mode as L0 prediction Pred_L0 when the inter-prediction index information 45 is '0' and as L1 prediction Pred_L1 when the inter-prediction index information 45 is '1.'

Also, based on bi-prediction restriction information, when a sum of horizontal and vertical sizes of a current prediction unit which is a B slice type is 12, the motion compensation apparatus 30 may determine whether inter-prediction using a bi-prediction list is restricted or not. Whether to parse 2-bit inter-prediction index information or 1-bit inter-prediction index information for a prediction unit may be determined based on the bi-prediction restriction information. When inter-prediction using a bi-prediction list is restricted with respect to a prediction unit for which a sum of horizontal and vertical sizes thereof is 12, 1 bit is parsed as inter-prediction index information of a current prediction unit, but when inter-prediction using a bi-prediction list is not restricted, 2 bits may be parsed.

Accordingly, the motion prediction apparatus 20 may skip symbol coding which indicates that a reference picture list for bidirectional inter-prediction is a bi-prediction list when a size of a prediction unit is 4x8 or 8x4. As an operation of transmitting information related to an unnecessary reference picture list is skipped, a transmission bit amount may be reduced. Likewise, the motion compensation apparatus 30 skips an operation of checking whether a reference picture list for bidirectional inter-prediction is a bi-prediction list when a size of a prediction unit is 4x8 or 8x4, and thus, a data parsing operation may also be reduced.

As described above, motion prediction and motion compensation are performed for each partition determined in a coding unit having a tree structure in the reference image determining apparatus 10, the motion prediction apparatus 20, and the motion compensation apparatus 30 according to the various embodiments described above with reference to FIGS. 1A through 4. Hereinafter, a video encoding method and a video decoding method based on a coding unit having a tree structure according to one or more embodiments will be described below with reference to FIGS. 5 through 17.

FIG. 5 is a block diagram illustrating a video encoding apparatus 100 involving video prediction based on a coding unit having a tree structure according to one or more embodiments.

The video encoding apparatus 100 involving video prediction based on a coding unit having a tree structure according to one or more embodiments includes maximum coding unit splitter 110, a coding unit determiner 120 and an output unit 130. Hereinafter, for convenience of description, the video encoding apparatus 100 involving video prediction based on a coding unit having a tree structure will be referred to as the "video encoding apparatus 100."

The coding unit determiner 120 may split a current picture based on a maximum coding unit for the current picture of an image. If the current picture is larger than the maximum coding unit, image data of the current picture may be split into the at least one maximum coding unit. The maximum coding unit according to one or more embodiments may be a data unit having a size of 32x32, 64x64, 128x128, 256x256, etc., wherein a shape of the data unit is a square having a width and length in squares of 2.

A coding unit according to one or more embodiments may be characterized by a maximum size and a depth. The depth denotes a number of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to one or more embodiments is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error.

The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to same depth in one maximum coding unit, it is determined whether to split each of the coding units corresponding to the same depth to a lower depth by measuring an encoding error of the image data of the each coding unit, separately. Accordingly, even when image data is included in one maximum coding unit, the image data is split to regions according to the depths and the encoding errors may differ according to regions in the one maximum coding unit, and thus the coded depths may differ according to regions in the image data. Thus, one or more coded depths may be determined in one maximum coding unit, and the image data of the maximum coding unit may be split according to coding units of at least one coded depth.

Accordingly, the coding unit determiner 120 may determine coding units having a tree structure included in the maximum coding unit. The 'coding units having a tree structure' according to one or more embodiments include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to one or more embodiments is an index related to the number of splitting times from a maximum coding unit to a minimum coding unit. A first maximum depth according to one or more embodiments may denote the total number of splitting times from the maximum coding unit to the minimum coding unit. A second maximum depth according to one or more embodiments may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit. Transformation may be performed according to method of orthogonal transformation or integer transformation.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in at least one maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. A partition may be a data unit in a split form of a prediction unit of a coding unit, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, an inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

Similarly as a coding unit having a tree structure according to one or more embodiments, a transformation unit in a coding unit is recursively further split into a smaller transformation unit so that residual data of the coding unit may also be partitioned according to a transformation unit having a tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

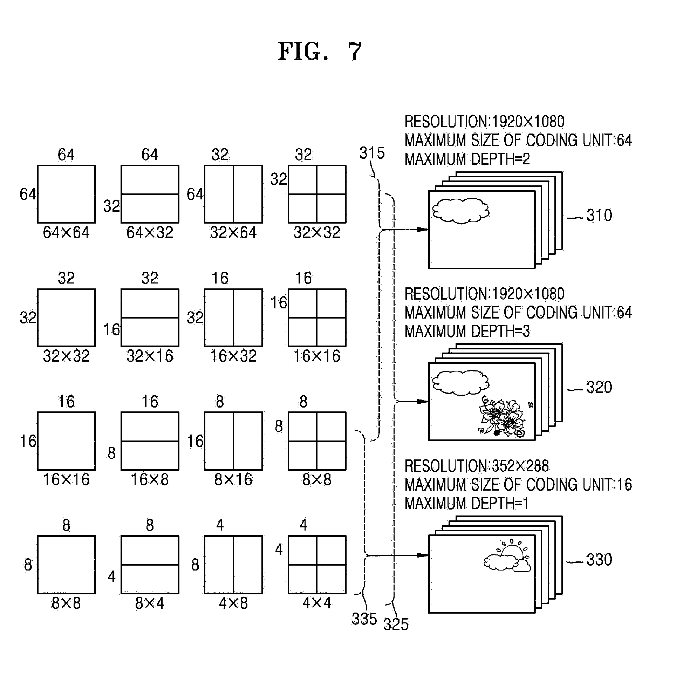

One of more methods of determining coding units according to a tree structure in a maximum coding unit and a prediction unit/partition and a transformation unit according to embodiments of the present disclosure, will be described in detail later with reference to FIGS. 7 through 17.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the coding units of the maximum coding unit may be different according to locations of the coding units since the coding units in the maximum coding unit is hierarchically split according to depths, and thus information about the coded depth and the encoding mode may be set for the coding units.

Accordingly, the output unit 130 may assign encoding information about a corresponding coded depth and an encoding mode to at least one of the coding unit, the prediction unit, and a minimum unit included in the maximum coding unit.

The minimum unit according to one or more embodiments is a rectangular data unit obtained by splitting the minimum coding unit constituting the lowermost depth by 4. Alternatively, the minimum unit may be a maximum rectangular data unit that may be included in all of the coding units, prediction units, partition units, and transformation units included in the maximum coding unit.

For example, the encoding information output through the output unit 130 may be classified into encoding information according to coding units according to coded depths, and encoding information according to prediction units. The encoding information according to the coding units according to coded depths may include the information about the prediction mode and about the size of the partitions. The encoding information transmitted according to the prediction units may include information about an estimated direction of an inter mode, about a reference image index of the inter mode, about a motion vector, about a chroma component of an intra mode, and about an interpolation method of the intra mode.

Also, information about a maximum size of the coding unit defined according to pictures, slices, or GOPs, and information about a maximum depth may be inserted into a header of a bitstream, a sequence parameter set (SPS) or a picture parameter set (PPS).

Also, information about a maximum size of a transformation unit that is allowed with respect to a current video and information about a minimum size of a transformation unit may be output through a header of a bistream, a SPS or a PPS. The output unit 130 may encode reference information related to prediction, prediction information, slice type information or the like and output the same.

In the video encoding apparatus 100 according to an embodiment, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include maximum 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 100 may determine a reference picture list to perform inter-prediction according to the motion prediction method described above with reference to FIGS. 2A and 2B.

The coding unit determiner 120 may determine a prediction unit for inter-prediction for each coding unit having a tree structure for each maximum coding unit and may perform inter-prediction for each prediction unit and its partition.

The coding unit determiner 120 determines a reference image used for temporal prediction with respect to images of a video. The reference image determining apparatus 10 determines prediction information indicating a temporal distance between a current image and a neighboring image, residues or the like. Accordingly, image information may be recorded by using prediction information instead of the whole image data.

The coding unit determiner 120 may determine a size of prediction units included in a coding unit and whether to perform intra-prediction or inter-prediction with respect to a current prediction unit. When a current slice is a B slice, a reference list to be used for inter-prediction of a current prediction unit may be determined. That is, an inter-prediction index indicating whether a reference list is a L0 list, a L1 list, or a bi-prediction list may be determined.

When a size of a current prediction unit according to one or more embodiments is 4X8 or 8X4, an inter-prediction index may indicate a reference picture list of one of a L0 list and a L1 list. When a size of a current prediction unit according to one or more embodiments is not 4X8 or 8X4, an inter-prediction index may indicate a reference picture list of one of a L0 list, a L1 list, and a bi-prediction list.

The output unit 130 may include, into a slice header, bi-prediction restriction information indicating whether inter-prediction where a bi-prediction list including a L0 list and a L1 list is used for the current prediction unit is allowed with respect to a prediction unit of a 4X8 or 8X4 size in a current slice.

The output unit 130 may encode and output inter-prediction index information determined according to a size of a current prediction unit with reference index information and motion vector difference information.

When a size of a current prediction unit according to one or more embodiments is 4X8 or 8X4, a binarization operation with respect to information indicating that a reference picture list is a bi-prediction list may be skipped.

The coding unit determiner 120 may determine prediction information indicating a reference index together with a temporal distance between a current image and a peripheral image, residues or the like.

FIG. 6 is a block diagram illustrating a video decoding apparatus 200 involving video prediction based on a coding unit having a tree structure according to one or more embodiments.

The video decoding apparatus 200 includes a receiver 210, an image data and encoding information extractor 220, and an image data decoder 230. Hereinafter, for convenience of description, the video decoding apparatus 200 involving video prediction based on a coding unit having a tree structure according to one or more embodiments will be referred to as the "video decoding apparatus 200."

Definitions of various terms, such as a coding unit, a depth, a prediction unit, a transformation unit, and information about various encoding modes, for various decoding operations of the video decoding apparatus 200 are identical to those described with reference to FIG. 5 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a SPS pr a PPS.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bitstream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. The predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

Also, the image data decoder 230 may perform inverse transformation according to each transformation unit in the coding unit, based on the information about the size of the transformation unit of the coding unit according to coded depths, so as to perform the inverse transformation according to maximum coding units. A pixel value of a spatial domain of a coding unit may be restored by inverse transformation.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded image data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. Information about an encoding mode is obtained for each coding unit determined in the above-described manner to thereby perform decoding of a current coding unit.

Also, the video decoding apparatus 200 may perform motion compensation by determining a reference index from among a reference picture list according to the motion compensation method described above with reference to FIGS. 3A and 3B.

When a current slice is a B slice, the image data and encoding information extractor 220 may parse, from a bitstream, inter-prediction index information indicating a reference picture list of a block, a reference index, motion vector, or the like. A type of a reference list to be used by a current prediction unit for motion compensation may be determined based on the inter-prediction index information.

The image data decoder 230 determines a prediction unit for motion compensation for each coding unit having a tree structure for each maximum coding unit and may perform motion compensation for each prediction unit and its partition.

The image data decoder 230 may determine sizes of prediction units when determining prediction units included in a coding unit. Inter-prediction index information may be differently read based on the sizes of the prediction units.

When a size of a current prediction unit is 4X8 or 8X4, the image data decoder 230 may determine a reference picture list of the current prediction unit to be one of a L0 list and a L1 list based on inter-prediction index information. A reference picture list except a bi-prediction list may be read from the inter-prediction index information.

If a size of a current prediction unit is not 4X8 or 8X4, the image data decoder 230 may determine that a reference picture list of the current prediction unit is one of a L0 list, a L1 list, and a bi-prediction list based on inter-prediction index information.

The image data and encoding information extractor 220 may parse, from a slice header, bi-prediction restriction information indicating whether inter-prediction where a bi-prediction list is used for the current prediction unit is allowed with respect to a prediction unit of a 4X8 or 8X4 size. Accordingly, based on bi-prediction restriction information, in a current slice, whether inter-prediction where a bi-prediction list is used for the current prediction unit is allowed with respect to a prediction unit of a 4X8 or 8X4 size may be determined. Also, the extractor 220 may determine whether to parse 2-bit inter-prediction index information or 1-bit inter-prediction index information of a prediction unit based on the parsed bi-prediction restriction information.

Also, when a size of a current prediction unit is 4X8 or 8X4, the extractor 220 may skip an operation of reading information that indicates that a reference picture list is a bi-prediction list, from a binarization bit string that is parsed from a bitstream.

When a size of a current prediction unit is 4X8 or 8X4, the extractor 220 may read a reference picture list except a bi-prediction list, from inter-prediction index information. Also, the extractor 220 may also skip an operation of checking whether inter-prediction index information is a bi-prediction list when a size of a current prediction unit is 4X8 or 8X4.

The image data decoder 230 may determine a reference picture indicated by a reference index from among reference pictures belonging to the reference picture list and determine a reference block indicated by a motion vector in the reference picture. The image data decoder 230 may restore a current block by compensating the reference block for a residue.

FIG. 7 is a diagram for describing a concept of coding units according to one or more embodiments.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

A partition for inter-prediction according to one or more embodiments may not include a 4x4 size partition.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 7 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

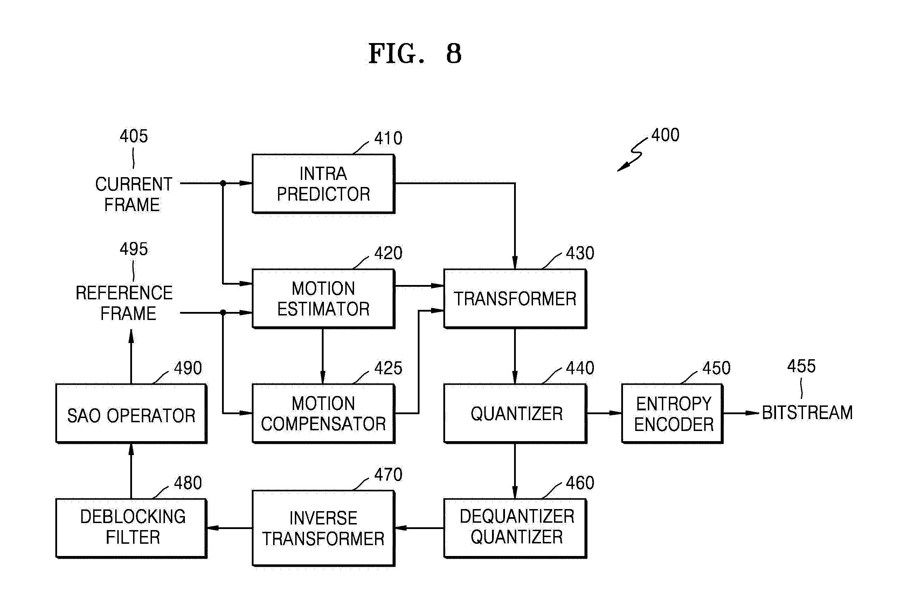

FIG. 8 is a block diagram of an image encoder 400 based on coding units, according to one or more embodiments.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and a SAO operator 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the SAO operator 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

The motion estimator 420 and the motion compensator 425 may determine a reference index based on the inter-prediction method described above with reference to FIGS. 1A through 3B, and may perform inter-prediction by using a reference picture from a reference picture list corresponding to the reference index.

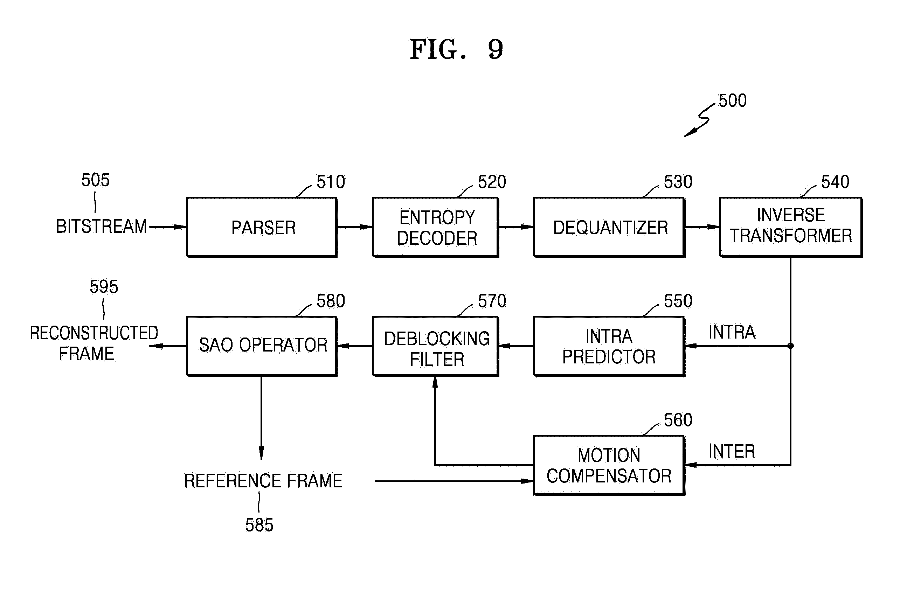

FIG. 9 is a block diagram of an image decoder 500 based on coding units, according to one or more embodiments.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and a SAO operator 580. Also, the image data that is post-processed through the deblocking unit 570 and the SAO operator 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the SAO operator 580 perform operations based on coding units having a tree structure for each maximum coding unit.

Specifically, the intra predictor 550 and the motion compensator 560 determine partitions and a prediction mode for each of the coding units having a tree structure, and the inverse transformer 540 determines a size of a transformation unit for each coding unit.

The motion compensator 560 may determine a reference index based on the inter-prediction method described above with reference to FIGS. 1A and 3B, and may perform motion compensation by using a reference picture from a reference picture list corresponding to the reference index.

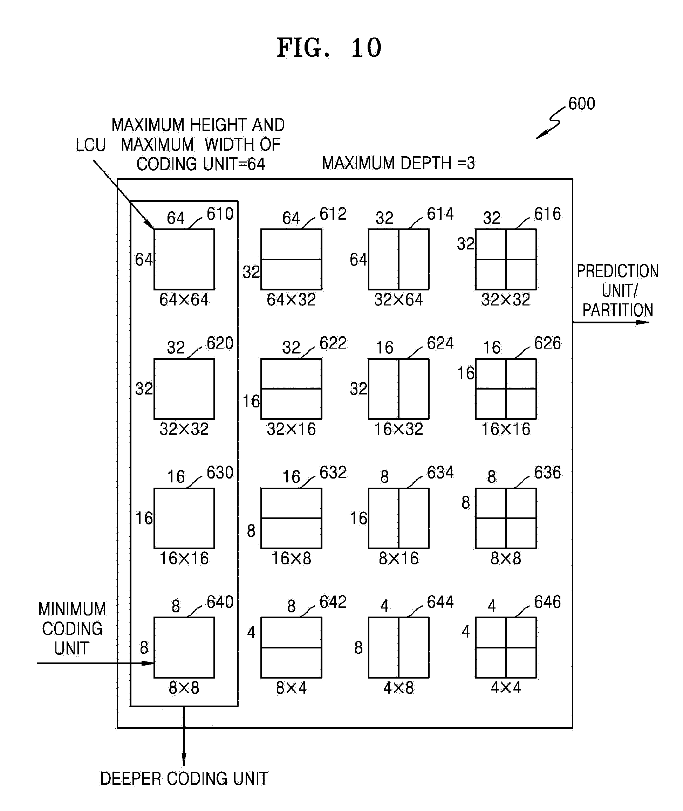

FIG. 10 is a diagram illustrating deeper coding units according to depths, and partitions, according to one or more embodiments.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to one or more embodiments, the maximum height and the maximum width of the coding units are each 64, and the maximum depth is 3. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 640 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

A partition for inter-prediction according to one or more embodiments may not include the partitions 646 having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

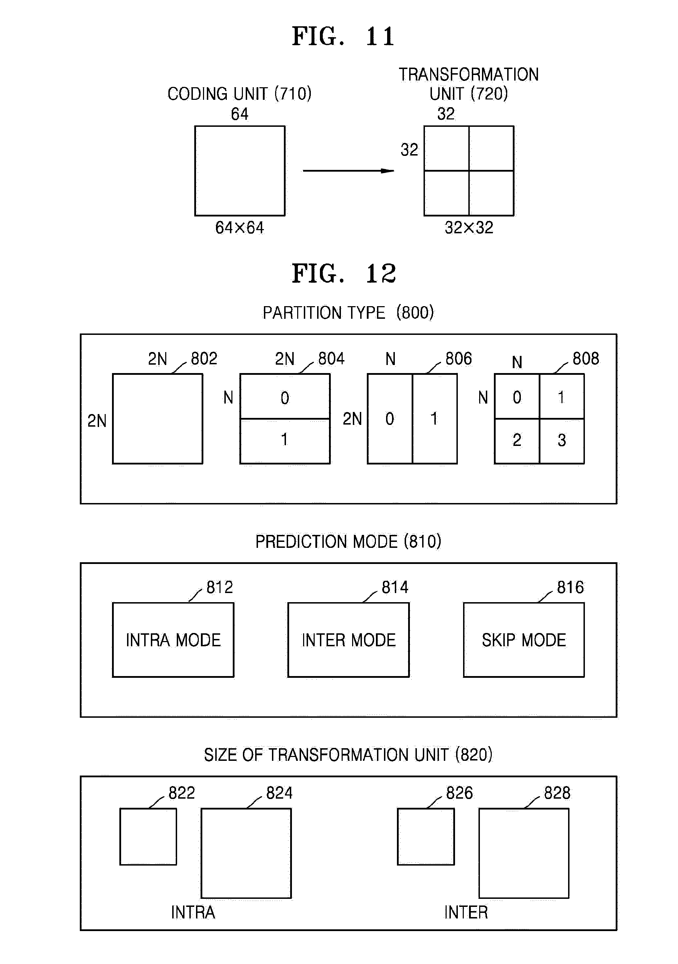

FIG. 11 is a diagram for describing a relationship between a coding unit 710 and transformation units 720, according to one or more embodiments.

The video encoding apparatus 100 or 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation unit 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 12 is a diagram for describing encoding information of coding units corresponding to a coded depth, according to one or more embodiments.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first intra transformation unit 826, or a second intra transformation unit 828.

The image data and encoding information extractor 220 of the video decoding apparatus 200 may extract and use the information 800, 810, and 820 for decoding, according to each deeper coding unit.

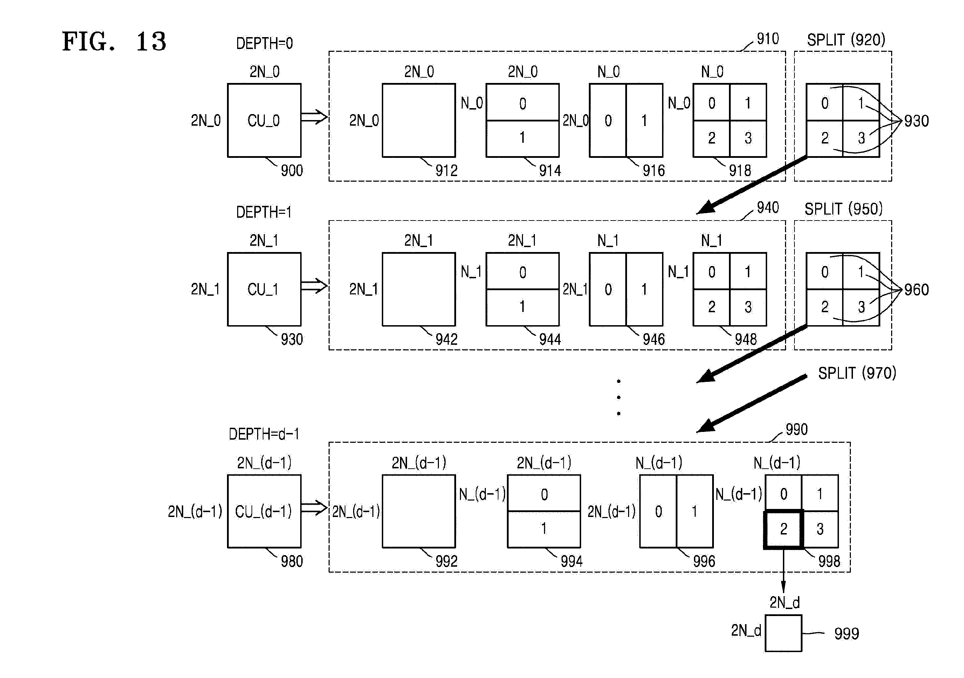

FIG. 13 is a diagram of deeper coding units according to depths, according to one or more embodiments.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1 x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d, split information for the coding unit 952 is not set.

A data unit 999 may be a 'minimum unit' for the current maximum coding unit. A minimum unit according to one or more embodiments may be a rectangular data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

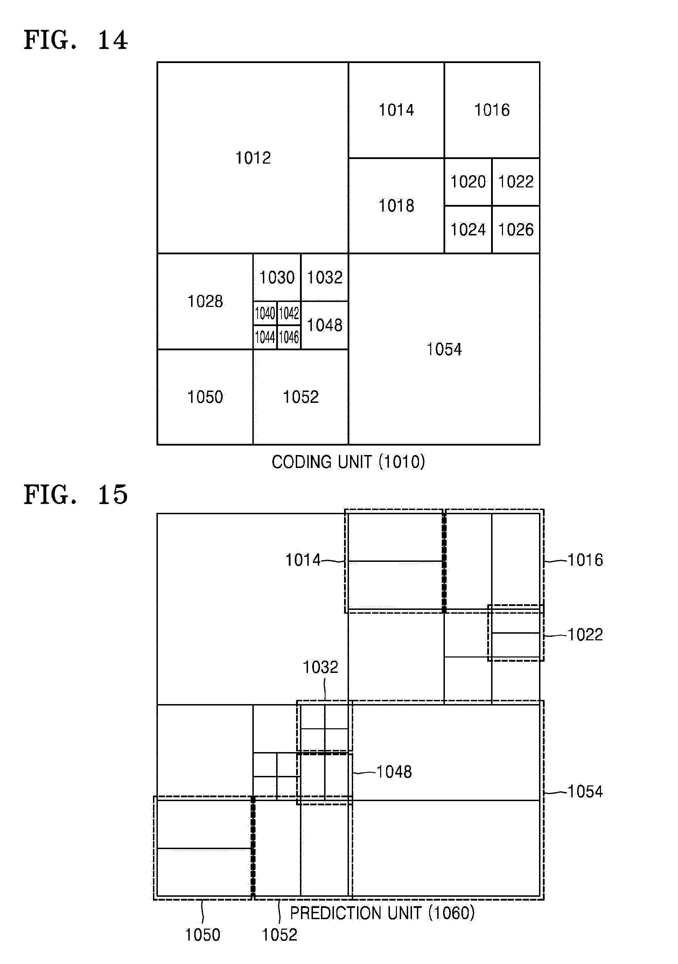

FIGS. 14 through 16 are diagrams for describing a relationship between coding units 1010, prediction units 1060, and transformation units 1070, according to one or more embodiments.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, 1052, and 1054 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding apparatus 100 and the video decoding apparatus 200.

Table 1

EP 2 887 650 A1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| | Symmetrical Partition Type | Asymmetrical Partition Type | Split Information 0 of Transformation Unit | Split Information 1 of Transformation Unit | Repeatedly Encode Coding Units having Lower Depth of d+1 |
| Intra Inter Skip (Only 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

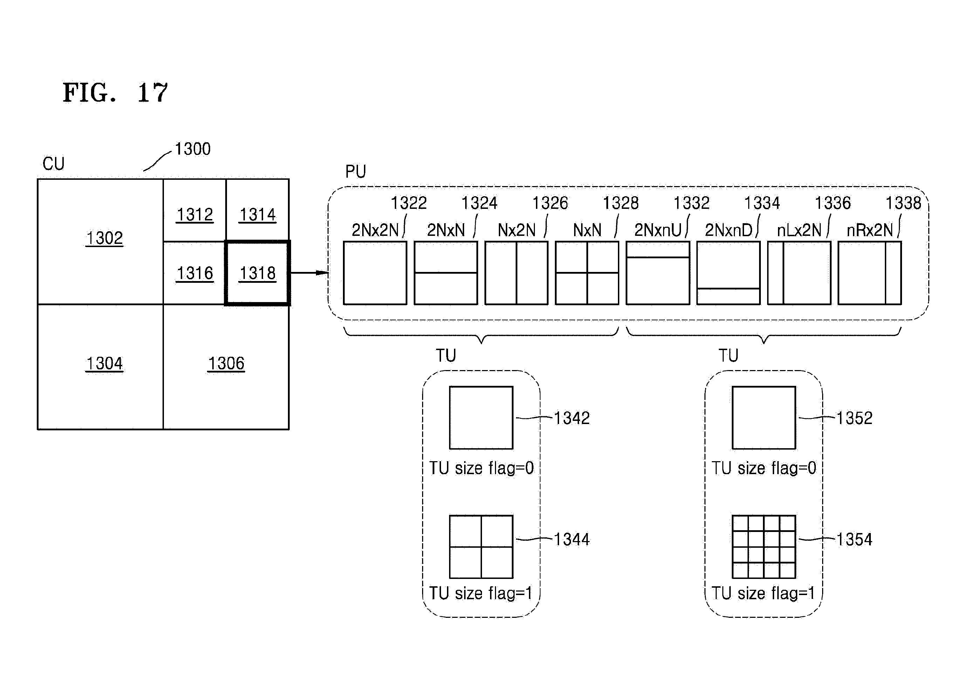

FIG. 17 is a diagram for describing a relationship between a coding unit, a prediction unit or a partition, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index, and a size of a transformation unit corresponding to a transformation index may be modified according to a prediction unit type or a partition type of a coding unit.

When the partition type is set to be symmetrical, i.e. the partition type 1322, 1324, 1326, or 1328, a transformation unit 1342 having a size of 2Nx2N is set if split information (TU size flag) of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 17, the TU size flag is a flag having a value or 0 or 1, but the TU size flag is not limited to 1 bit, and a transformation unit may be hierarchically split having a tree structure while the TU size flag increases from 0. The TU size flag may be used as an exemplary embodiment of a transformation index.

In this case, the size of a transformation unit that has been actually used may be expressed by using a TU size flag of a transformation unit, according to one or more embodiments, together with a maximum size and minimum size of the transformation unit. According to one or more embodiments, the video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. According to one or more embodiments, the video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize} = \max(\text{MinTransformSize}, \text{RootTuSize}/(2^{\text{MaxTransformSizeIndex}})) \qquad \text{.......} \quad (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to one or more embodiments, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \qquad ......... \quad (2)$$

That is, if the current prediction mode is the inter mode, the transformation unit size 'RootTuSize' when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$\text{RootTuSize} = \min(\text{MaxTransformSize}, \text{PartitionSize}) \qquad ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present disclosure is not limited thereto.

According to the video encoding method based on coding units having a tree structure described above with reference to FIGS. 5 through 17, image data of a spatial domain is encoded for each coding unit having a tree structure, and as decoding is performed for each maximum coding unit according to the video decoding method based on coding units having a tree structure, image data of a spatial domain is restored. Accordingly, a picture or a video which is a picture sequence may be restored. The restored video may be reproduced by using a reproduce apparatus, stored in a storage medium, or transmitted through a network.

The embodiments of the present disclosure can be written as computer programs and can be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

For convenience of description, the video encoding method according to the inter-prediction method, the motion prediction method, and the motion compensation method described above with reference to FIGS. 1A through 17 will be referred to as a 'video encoding method according to the present disclosure.' Also, the video decoding method according to the inter-prediction method and the motion compensation method described above with reference to FIGS. 1A through 20 will be referred to as a 'video decoding method according to the present disclosure.'

Also, a video encoding apparatus including the reference image determining apparatus 10, the motion prediction apparatus 20, the motion compensation apparatus 30, the video encoding apparatus 100 or the image encoder 400, which are described above with reference to FIGS. 1A through 17, will be referred to as a 'video encoding apparatus of the present disclosure.' Also, a video decoding apparatus including the reference image determining apparatus 10, the motion compensation apparatus 30, the video decoding apparatus 200 or the image decoder 500 will be referred to as a 'video decoding apparatus according to the present disclosure.'

Hereinafter, one or more embodiments in which a disk 26000 is included as a computer readable storage medium storing a program will be described.

FIG. 18 illustrates a physical structure of a disk 26000 in which a program is stored, according to one or more embodiments. Examples of the disk 26000 described as a storage medium may be a hard drive, a compact disk-read only memory (CD-ROM) disk, a Blu-ray disk, or a digital versatile disk (DVD). The disk 26000 includes a plurality of concentric tracks tr that are split into a predetermined number of sectors Se in a circumferential direction. In a predetermined region of the disk 26000 in which programs according to the above-described embodiments are stored, programs for executing an inter-prediction method, the video encoding method, and the video decoding method described above may be allocated and stored.

A computer system that is embodied by using a storage medium that stores a program for executing the video encoding method and video decoding method described above will be described below with reference to FIG. 19.

FIG. 19 illustrates a disk drive 26800 for recording and reading a program by using the disk 26000. A computer system 26700 may store a program for executing at least one of a video encoding method and a video decoding method n a disk 26000. To execute the program stored in the disk 26000 on the computer system 26700, a program may be read from the disk 26000 via the disk drive 26800 and transmitted to the computer system 26700.

A program for executing at least one of the video encoding method and the video decoding method according to the embodiments of the present disclosure may be stored not only in the disk 26000 illustrated in FIGS. 18 and 19 but also in a memory card, a ROM cassette, or a solid state drive (SSD).

A system to which the video encoding method and the video decoding method according to the embodiments of the present disclosure are applied will be described below.

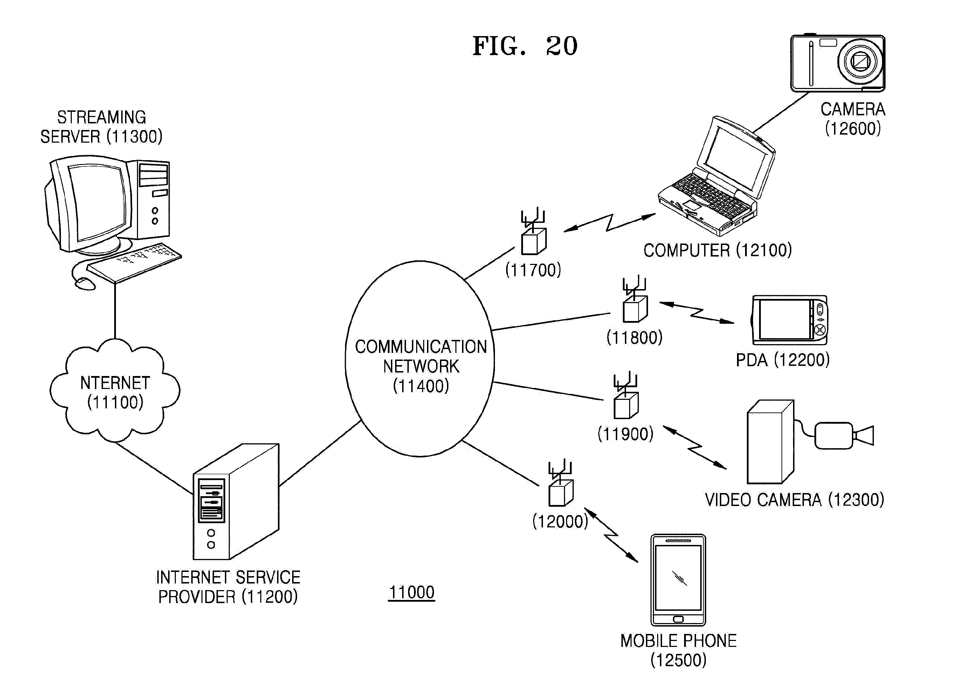

FIG. 20 illustrates an overall structure of a content supply system 11000 for providing a content distribution service, according to one or more embodiments. A service area of a communication system is divided into cells having predetermined sizes, and wireless base stations 11700, 11800, 11900, and 12000 are installed in the cells, respectively.

The content supply system 11000 includes a plurality of independent devices. For example, the plurality of independent devices such as a computer 12100, a personal digital assistant (PDA) 12200, a camera 12300, and a mobile phone 12500 are connected to the Internet 11100 via the Internet service supplier 11200, the communication network 11400, the wireless base stations 11700, 11800, 11900, and 12000.

However, the content supply system 11000 is not limited to the structure illustrated in FIG. 20, and devices may be selectively connected thereto. The independent devices may also be directly connected to the communication network 11400, not via the wireless base stations 11700, 11800, 11900, and 12000.

The video camera 12300 is an image capturing device such as a digital video camera, which is capable of photographing a video image. The mobile phone 125000 may use at least one communication method from among various protocols such as Personal Digital Communications (PDC), Code Division Multiple Access (CDMA), Wideband- Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by using the video camera 12300 may be transmitted to the streaming server 11300 via the computer 12100.

Video data captured by a camera 12600 may also be transmitted to the streaming server 11300 via the computer 12100. The camera 12600 is an image capturing device capable of capturing both still images and video images, similar to a digital camera. The video data captured by using the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by using a camera built in The mobile phone 125000, the video data may be received from The mobile phone 125000.

The video data may also be encoded by a large scale integrated circuit (LSI) system installed in the video camera 12300, The mobile phone 125000, or the camera 12600.

In the content supply system 11000, contents that is obtained by recording by a user by using the video camera 12300, the camera 12600, The mobile phone 125000, or other image capturing device, such as a content of recording of a concert, may be encoded and transmitted to the streaming server 11300. The streaming server 11300 may transmit content data as a streaming, to other clients that have requested the content data.

The clients are devices that are capable of decoding the encoded content data, and may be, for example, the computer 12100, the PDA 12200, the video camera 12300 or The mobile phone 125000. Accordingly, the content supply system 11000 allows the clients to receive and reproduce the encoded content data. Also, the content supply system 11000 allows the clients to receive the encoded content data and decode the same in real-time and to reproduce the same, thereby enabling personal broadcasting.

The video encoding apparatus and the video decoding apparatus according to the embodiments of the present disclosure may be applied in encoding and decoding operations of the independent devices included in the content supply system 11000.

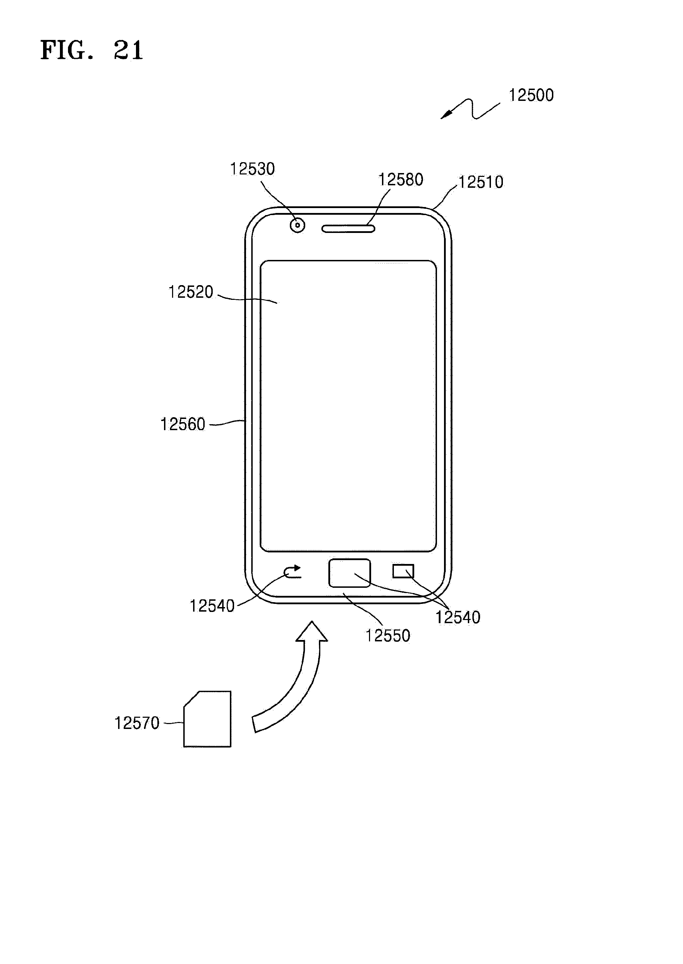

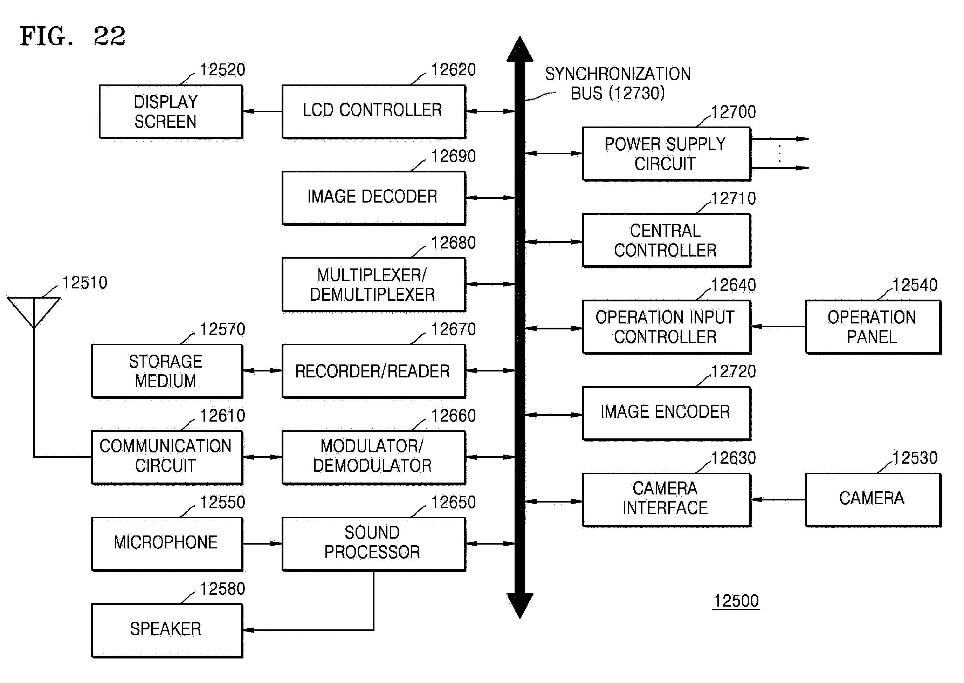

The mobile phone 125000 of the content supply system 11000 according to one or more embodiments will be described in detail with reference to FIGS. 21 and 22.

FIG. 21 illustrates an external structure of The mobile phone 125000 to which a video encoding method and a video decoding method according to the embodiments of the present disclosure are applied. The mobile phone 125000 may be a smartphone, the functions of which are not limited and a large number of the functions of which may be modified or extended.

The mobile phone 125000 may include an internal antenna 12510 through which an RF signal may be exchanged with the wireless base station 12000, and includes a display screen 12520 such as a liquid crystal display (LCD) or an organic light emitting diode (OLED) screen, for displaying images photographed by using the camera 12530 or images that are received via the antenna 12510 and decoded. The mobile phone 125000 includes an operation panel 12540 including a control button or a touch panel. When the display screen 125200 is a touch screen, the operation panel 12540 further includes a touch sensing panel of the display screen 125200. The mobile phone 125000 includes a speaker 12580 for outputting voice or sound or other type of sound output unit and a microphone 12550 for inputting voice or sound or other type of sound input unit. The mobile phone 125000 further includes a camera 12530 such as a charge-coupled device (CCD) camera, to capture a video or a still image. Also, The mobile phone 125000 may include a storage medium 12570 for storing data that is encoded or decoded, such as a video or a still image that is obtained by photographing by using the camera 12530 or received via an E-mail or obtained in other form; and a slot 12560 via which the storage medium 12570 is loaded into The mobile phone 125000. The storage medium 12570 may be flash memory such as a secure digital (SD) card or an electrically erasable and programmable read only memory (EEPROM) embedded in a plastic case.

FIG. 22 illustrates an internal structure of The mobile phone 125000. To systematically control each part of The mobile phone 125000 including the display screen 125200 and the operation panel 12540, a power supply circuit 12700, an operation input control unit 12640, an image encoding unit 12720, a camera interface 12630, a LCD control unit 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

When a user operates a power button to set from a 'power off' state to a 'power on' state, the power supply circuit 12700 may supply power to each part of The mobile phone 125000 from a battery pack to thereby set The mobile phone 125000 in an operating mode.

The central controller 12710 includes a central processing unit (CPU), a read only memory (ROM), and a random access memory (RAM).

While The mobile phone 125000 transmits communication data to the outside, a digital signal is generated in The mobile phone 125000 according to a control of the central controller 12710. For example, a digital sound signal may be generated in the sound processor 126500, and a digital image signal may be generated in the image encoding unit 12720, and text data of a message may be generated via the operation panel 12540 and the operation input control unit 12640. As a digital signal is transmitted to the modulation/demodulation unit 12660 according to a control of the central controller 12710, the modulation/demodulation unit 12660 may modulate a frequency band of a digital signal and the communication circuit 12610 performs digital-analog conversion and frequency conversion on the frequency band-modulated digital sound signal. A transmission signal output from the communication circuit 12610 may be transmitted to a voice communication base station or the wireless base station 12000 via the antenna 12510.

For example, a sound signal that is obtained by using the microphone 12550 while The mobile phone 125000 is in a conversation mode, is transformed into a digital sound signal by the sound processor 126500 according to a control of the central controller 12710. The digital sound signal may be transformed into a transmission signal via the modulation/demodulation unit 12660 and the communication circuit 12610, and may be transmitted via the antenna 12510.

When a text message such as an e-mail is transmitted in a data communication mode, text data of the message is input by using the operation panel 12540 and is transmitted to the central controller 12710 via the operation input control unit 12640. According to a control of the central controller 12710, the text data is transformed into a transmission signal via the modulation/demodulation unit 12660 and the communication unit 12610, and is transmitted to the wireless base station 12000 via the antenna 12510.

To transmit image data in a data communication mode, image data obtained by photographing by using the camera 12530 is provided to the image encoding unit 12720 via the camera interface 12630. The image data obtained by photographing by using the camera 12530 may be directly displayed on the display screen 125200 via the camera interface 12630 and the LCD control unit 12620.

A structure of the image encoding unit 12720 may correspond to that of the video encoding apparatus 100 according to the embodiment of the present disclosure described above. The image encoding unit 12720 may encode image data provided by the camera 12530 to transform the image data into image data that is compressed and encoded image data by using a video encoding method according to the embodiment of the present disclosure described above, and then output the encoded image data to the multiplexer/demultiplexer 12680. During a recording operation of the camera 12530, a sound signal that is obtained via the microphone 12550 of The mobile phone 125000 may also be transformed into digital sound data via the sound processor 126500, and the digital sound data may be transmitted to the multiplexer/demultiplexer 12680.

The multiplexer/demultiplexer 12680 multiplexes the encoded image data provided by the image encoding unit 12720, together with the sound data provided by the sound processor 126500. The multiplexed data may be transformed into a transmission signal via the modulation/demodulation unit 12660 and the communication circuit 12610 and may be transmitted via the antenna 12510.

While The mobile phone 125000 receives communication data from the outside, a signal received via the antenna 12510 is transformed into a digital signal by performing frequency recovery and analog-to-digital conversion (ADC). The modulation/demodulation unit 12660 modulates a frequency band of the digital signal. The frequency band-modulated digital signal is transmitted to the video decoding unit 12690, the sound processor 126500 or the LCD control unit 12620 according to the type of the digital signal.

In the conversation mode, The mobile phone 125000 amplifies a signal received via the antenna 12510 and generates a digital sound signal by frequency conversion and ADC. The received digital sound signal is transformed into an analog sound signal via the modulation/demodulation unit 12660 and the sound processor 126500, and the analog sound signal is output through the speaker 125800, according to a control of the central controller 12710.

When data of a video file accessed on an Internet website is received in the data communication mode, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream is provided to the video encoding unit 12690, and the encoded audio data stream is provided to the sound processor 126500.

A structure of the image decoding unit 12690 may correspond to that of the video decoding apparatus according to the embodiment of the present disclosure described above. The image decoding unit 12690 may decode the encoded video data to generate restored video data and provide the restored video data to the display screen 125200 via the LCD control unit 12620, by using the video decoding method according to the embodiment of the present disclosure described above.

Accordingly, video data of the video file accessed on the Internet website may be displayed on the display screen 12520. At the same time, the sound processor 12650 may also transform audio data into an analog sound signal, and provide the analog sound signal to the speaker 12580. Thus, audio data contained in the video file accessed on the Internet website may also be reproduced via the speaker 12580.

The mobile phone 12500 or other types of communication terminals may be a transmission/reception terminal including both a video encoding apparatus and a video decoding apparatus according to the embodiments of the present disclosure, or a transmission terminal including only the video encoding apparatus, or a reception terminal including only the video decoding apparatus.

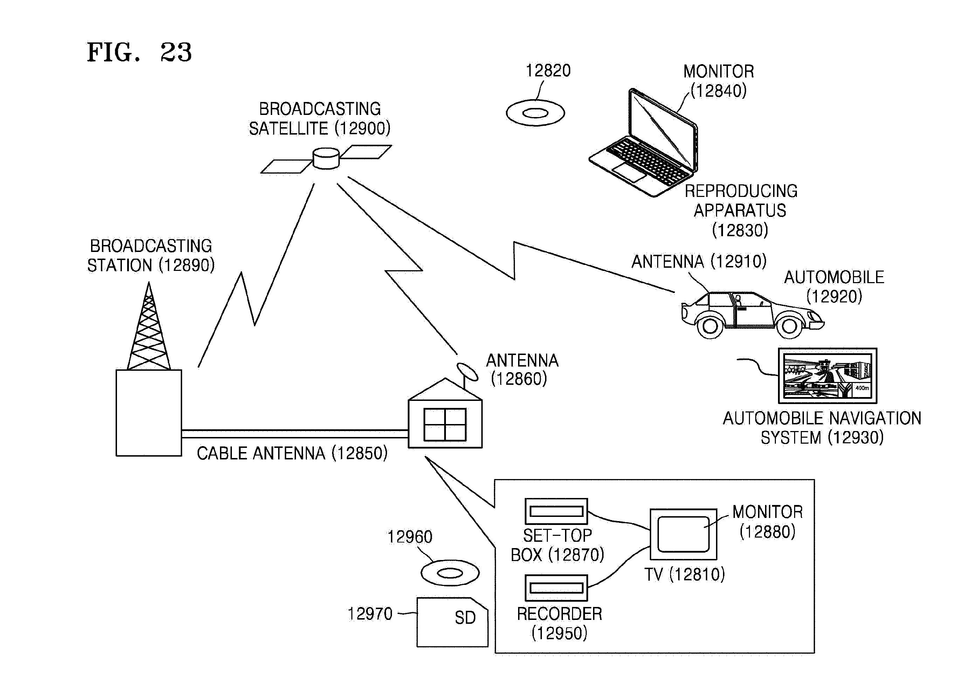

A communication system according embodiments of the present disclosure is not limited to the above structure described with reference to FIG. 20. For example, FIG. 23 illustrates a digital broadcasting system, in which a communication system according to one or more embodiments is applied, according to one or more embodiments. The digital broadcasting system of FIG. 23 may receive digital broadcasting transmitted via a satellite or a terrestrial network by using the video encoding apparatus or the video decoding apparatus according to the embodiments of the present disclosure.

In detail, a broadcasting station 12890 transmits a video data stream via a radio wave, to a communication satellite or a broadcasting satellite 12900. The broadcasting satellite 12900 transmits a broadcasting signal, and the broadcasting signal is received by a satellite broadcasting receiver via an antenna 12860 in each home. In each home, an encoded video stream may be decoded by using a TV receiver 12810, a set-top box 12870, or other device to be reproduced.

As the video decoding apparatus according to the embodiment of the present disclosure is implemented in a reproduce apparatus 12830, the reproduce apparatus 12830 may read and decode an encoded video stream recorded on the storage medium 12820 such as a disk or a memory card. Thus, the restored video signal may be reproduced on, for example, a monitor 12840.

The video decoding apparatus according to the embodiment of the present disclosure may also be mounted in the set-top box 12870 connected to the antenna 12860 for receiving satellite/terrestrial broadcasting or a cable antenna 12850 for receiving cable TV broadcasting. Data output from the set-top box 12870 may also be reproduced on a TV monitor 12880.

Alternatively, the video decoding apparatus according to the embodiment of the present disclosure may be mounted in the TV receiver 12810 instead of the set-top box 12870.

An automobile 12920 including an appropriate antenna 12910 may receive a signal transmitted by a satellite 12800 or the wireless base station 11700 of FIG. 21. A decoded video may be reproduced on a display screen of an automobile navigation system 12930 mounted in the automobile 12920.

A video signal may be encoded by using a video encoding apparatus according to the embodiment of the present disclosure and recorded and stored in a storage medium. In detail, an image signal may be stored in a DVD disk 12960 by using a DVD recorder or may be stored in a hard disk by using a hard disk recorder 12950. Alternatively, a video signal may be stored in a SD card 12970. When the hard disk recorder 12950 includes the video decoding apparatus according to the embodiment of the present disclosure, a video signal recorded in the DVD disk 12960, the SD card 12970 or other type of storage medium may be reproduced on the TV monitor 12880.

The automobile navigation system 12930 may not include the camera 12530, the camera interface 12630, and the image encoding unit 12720 of FIG. 23. For example, the computer 12100 and the TV receiver 12810 may also not include the camera 12530, the camera interface 12630, and the image encoding unit 12720 of FIG. 23.

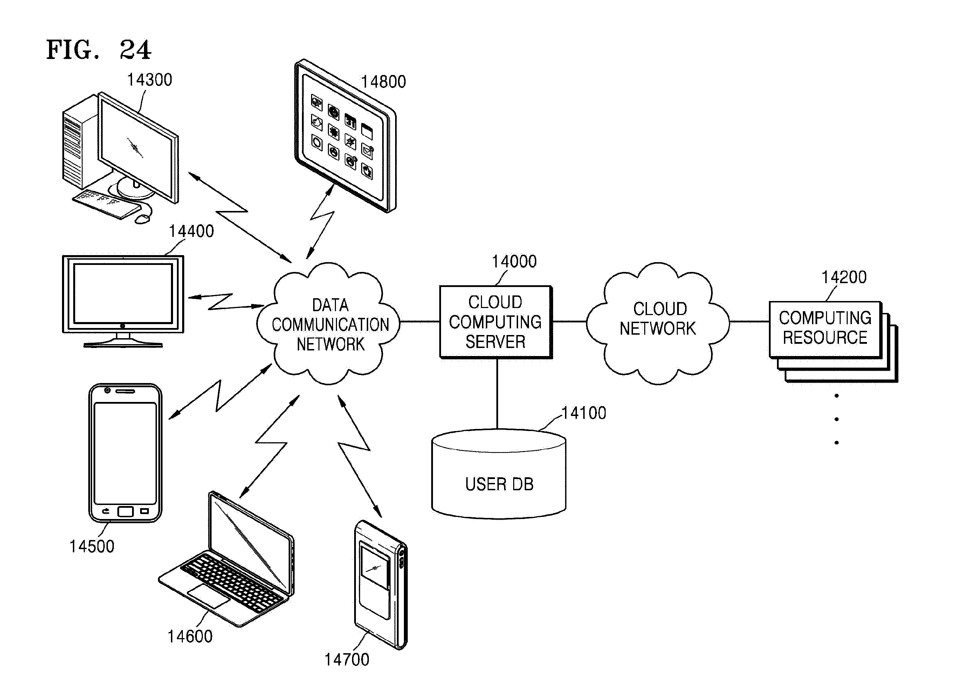

FIG. 24 illustrates a network structure of a cloud computing system using a video encoding apparatus and a video decoding apparatus according to one or more embodiments.

The cloud computing system according to the current embodiment of the present disclosure may include a cloud computing server 14000, a user database (DB) 14100, a plurality of computing resources 14200, and a user terminal.

The cloud computing system provides an on-demand outsourcing service of the computing resources 260 through a data communication network such as the Internet, upon a request by a user terminal. In a cloud computing environment, a service provider provides users with requested services by integrating computing resources of a data center located at different physical positions by using a virtualization technique. Instead of using computing resources such as an application, a storage, an operating system (OS), or a security or the like by installing the same in each terminal of the user, a service user may select and use a service in virtual space that is generated by using the virtualization technique as desired and at a desired point of time.

A user terminal of a predetermined service user connects to the cloud computing server 14000 via a data communication network including the Internet and a mobile communication network. User terminals may be provided with a cloud computing service, particularly, a video reproduce service, from the cloud computing server 14000. A user terminal may be any electronic device that is connectable to the Internet, such as a desktop PC 14300, a smart TV 14400, a smartphone 14500, a laptop computer 14600, a portable multimedia player (PMP) 14700 or a tablet PC 14800.

The cloud computing server 14000 may integrate the plurality of computing resources 14200 distributed in a cloud network and provide a user terminal with the integrated computing resources 14200. The plurality of computing resources 14200 includes various data services, and may include data uploaded from the user terminal. In this manner, the cloud computing server 14000 may provide a service requested by the user terminal by integrating video databases that are distributed in different regions by using the virtualization technique.

In the user DB 14100, user information of users who have subscribed a cloud computing service is stored. The user information may include log-in information and personal credit information such as addresses and names. Also, the user information may include indexes of videos. The indexes may include a list of videos that have been completely reproduced, a list of videos that are being reproduced, and a pausing point of a video that was being reproduced, and the like.

Information about a video stored in the user DB 14100 may be shared between user devices. For example, when a predetermined video service is provided to the laptop computer 14600 upon a reproduction request made by the laptop computer 14600, a reproduce history of the predetermined video service is stored in the user DB 14100. When a request to reproduce the same video service is received from the smartphone 14500, the cloud computing server 14000 searches for and reproduces this video service by referring to the user DB 14100. When the smartphone 14500 receives a video data stream through the cloud computing server 14000, an operation of reproducing a video by decoding a video data stream is similar to an operation of The mobile phone 125000 described above with reference to FIG. 21.

The cloud computing server 14000 may refer to a reproduce history of a predetermined video service, stored in the user DB 14100. For example, the cloud computing server 14000 receives a request to reproduce a video stored in the user DB 14100, from a user terminal. If the video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce a video from a start thereof, the cloud computing server 14000 transmits streaming data of a corresponding video from a first frame thereof, to the user terminal. On the other hand, if the terminal requests to reproduce a video from a pausing point thereof, the cloud computing server 14000 transmits streaming data of the video from a frame corresponding to the pausing point, to the user terminal.

Here, the user terminal may include a video decoding apparatus according to the embodiment of the present disclosure described above with reference to FIGS. 1A through 17. According to another embodiment, the user terminal may include a video encoding apparatus according to the embodiment of the present disclosure described above with reference to FIGS. 1A through 17. Also, the user terminal may include both the video encoding apparatus and the video decoding apparatus described above with reference to FIGS. 1A through 17.

Various application examples of the video encoding method and the video decoding method described above with reference to FIGS. 1A through 17 and the video encoding apparatus and the video decoding apparatus according to the present disclosure are described above with reference to FIGS. 18 through 24. However, methods of storing the video encoding method and the video decoding method described above with reference to FIGS. 1A through 17 in a storage medium or method of implementing the video encoding apparatus and the video decoding apparatus in a device are not limited to the embodiments of FIGS. 18 through 24.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present disclosure.

**Claims**

1. A motion prediction method, the motion prediction method comprising:

   determining, when a current slice is a B slice, a reference picture list used by a current prediction unit from among prediction units included in a coding unit; and
   outputting, when a size of the current prediction unit is 4X8 or 8X4, inter-prediction index information of the current prediction unit indicating a reference picture list from among a L0 list and a L1 list, and when a size of the current prediction unit is not 4X8 or 8X4, the inter-prediction index information of the current prediction unit indicating a reference picture list from among a L0 list, a L1 list, and a bi-prediction list.

2. The motion prediction method of claim 1, further comprising:

   determining whether inter-prediction where the bi-prediction list including the L0 list and the L1 list is used for the current prediction unit is allowed with respect to a prediction unit of a 4X8 or 8X4 size in the current slice; and
   including bi-prediction restriction information indicating that inter-prediction where the bi-prediction list is used for the current prediction unit is not allowed with respect to the prediction unit of a 4X8 or 8X4 size, into a slice header of the current slice.

3. The motion prediction method of claim 1, wherein the outputting of inter-prediction index information of the current prediction unit comprises outputting, when a size of the current prediction unit is 4X8 or 8X4, the inter-prediction index information indicating that a reference picture list for the current prediction unit is a reference picture list except the bi-prediction list.

4. The motion prediction method of claim 1, wherein in the outputting, when a size of the current prediction unit is 4X8 or 8X4, a binarization operation for information indicating that the reference picture list is a bi-prediction list is skipped.

5. The motion prediction method of claim 1, further comprising:

determining a reference block for inter-prediction of the current prediction unit from among reconstructed images belonging to a reference picture list indicated by the inter-prediction index information; and
determining a motion vector indicating a spatial distance between the current prediction unit and the reference block and residues indicating a pixel value difference between the current prediction unit and the reference block, wherein the outputting further comprising outputting reference index information indicating a reconstructed image including the reference block from among reconstructed images belonging to the reference picture list, motion vector difference information indicating a difference between motion vector of the current prediction unit and a previous motion vector, and the residual difference component.

6. A motion compensation method, the motion compensation method comprising:

obtaining, when a current slice is a B slice, inter-prediction index information indicated according to a type of a reference picture list to be used by a current prediction unit from among prediction units included in a coding unit; and
determining, when a size of the current prediction unit is 4X8 or 8X4, a reference picture list of the current prediction unit based on the inter-prediction index information indicating that the reference picture list is one of a L0 list and a L1 list, and when a size of the current prediction unit is not 4X8 or 8X4, determining a reference picture list of the current prediction unit based on the inter-prediction index information indicating that the reference picture list is one of a L0 list, a L1 list, and a bi-prediction list.

7. The motion compensation method of claim 6, further comprising:

parsing bi-prediction restriction information indicating whether inter-prediction is allowed with respect to the prediction unit of a 4X8 or 8X4 size, from a slice header of the current slice; and
determining whether inter-prediction where the bi-prediction list including the L0 list and the L1 list is used for the current prediction unit is allowed with respect to a prediction unit of a 4X8 or 8X4 size in the current slice based on the parsed bi-prediction restriction information.

8. The motion compensation method of claim 6, wherein in the obtaining the inter-prediction index information, when a size of the current prediction unit is 4X8 or 8X4, an operation of reading information indicating that the reference picture list is a bi-prediction list from a binarizatoin bit string parsed from the bitstream is skipped.

9. The motion compensation method of claim 6, wherein the determining comprises reading a reference picture list except the bi-prediction list from the inter-prediction index information when the size of the current prediction unit is 4X8 or 8X4,
wherein when the size of the current prediction unit is 4X8 or 8X4, an operation of checking whether the inter-prediction index information indicates that the reference picture list is the bi-prediction list is skipped.

10. The motion compensation method of claim 6, further comprising:

further obtaining a reference index and motion vector difference information of the current prediction unit determined based on a reference picture list indicated by the inter-prediction index information;
obtaining partition type information of the coding unit; and
determining a size and a form of the prediction units based on the partition type information.

11. The motion compensation method of claim 6, further comprising:

determining, based on the determined reference picture list, a reference image indicated by a reference index of the current prediction unit from among first restored reference images and a reference block indicated by a motion vector of the current prediction unit, from the reference image; and
restoring the current prediction unit by combining the reference block and residues of the current prediction unit.

**12.** A motion prediction apparatus comprising:

a motion prediction unit for determining, when a current slice is a B slice, a reference picture list to be used by a current prediction unit from among prediction units included in a coding unit and a reference block for the current prediction unit from among reconstructed images belonging to the reference picture list; and
an inter-prediction information output unit for outputting, when a size of the current prediction unit is 4X8 or 8X4, inter-prediction index information of the current prediction unit indicating that the reference picture list is one of a L0 list and a L1 list, and when the size of the current prediction unit is not 4X8 or 8X4, inter-prediction index information of the current prediction unit indicating a reference picture list which is one of a L0 list, a L1 list, and a bi-prediction list.

**13.** A motion compensation apparatus comprising:

an inter-prediction information obtaining unit for obtaining, when a current slice is a B slice, inter-prediction index information indicating a reference picture list according to a type of the reference picture list that is to be used by a current prediction unit from among prediction units included in a coding unit; and
a motion compensation unit for determining, when a size of the current prediction unit is 4X8 or 8X4, a reference picture list of the current prediction unit based on the inter-prediction index information of the current prediction unit indicating that the reference picture list is one of a L0 list and a L1 list, and determining, when the size of the current prediction unit is not 4X8 or 8X4, a reference picture list of the current prediction unit based on the inter-prediction index information of the current prediction unit indicating that the reference picture list is of one of a L0 list, a L1 list, and a bi-prediction list, and performing motion compensation on the current prediction unit by using the determined reference picture list.

**14.** A computer readable recording medium having embodied thereon a computer program for executing the motion prediction method of claim 1.

**15.** A computer readable recording medium having embodied thereon a computer program for executing the motion compensation method of claim 6.

# FIG. 1A

REFERENCE
PICTURE LIST
DETERMINING UNIT
12

REFERENCE
INDEX
DETERMINING
UNIT
14

10

# FIG. 1B

START

CHECK SLICE TYPE — 11

IF SLICE TYPE IS B SLICE TYPE, DETERMINE
INTER-PREDICTION DIRECTION OF BLOCK — 13

IF INTER-PREDICTION DIRECTION IS NOT SECOND
DIRECTION, SELECT REFERENCE INDEX OF FIRST
DIRECTION — 15

IF INTER-PREDICTION DIRECTION IS NOT FIRST
DIRECTION, SELECT REFERENCE INDEX
OF SECOND DIRECTION — 17

END

# FIG. 2A

# FIG. 2B

# FIG. 3A

```
          ┌─────────────────┐         ┌─────────────────┐
          │      ╱32        │         │      ╱34        │
   ──────▶│  INTER-PREDICTION│───────▶│     MOTION      │──────▶
          │   INFORMATION   │         │  COMPENSATION   │
          │  OBTAINING UNIT │         │      UNIT       │
          └─────────────────┘         └─────────────────┘
```

30

# FIG. 3B

```
                      ┌─────────┐
                      │  START  │
                      └─────────┘
                           │
                           ▼
  ┌──────────────────────────────────────────────┐
  │   OBTAIN INTER-PREDICTION INDEX INFORMATION   │──── 31
  │            OF PREDICTION UNIT                  │
  └──────────────────────────────────────────────┘
                           │
                           ▼
  ┌──────────────────────────────────────────────┐
  │   DETERMINE REFERENCE PICTURE LIST OF CURRENT │
  │  PREDICTION UNIT BY USING, WHEN SIZE OF       │
  │  PREDICTION UNIT IS 4X8 OR 8X4, INTER-        │
  │  PREDICTION INDEX INFORMATION INDICATING L0   │──── 33
  │  LIST OR L1 LIST, AND OTHERWISE, BY USING     │
  │  INTER-PREDICTION INDEX INFORMATION INDICATING│
  │  L0 LIST, L1 LIST OR BI-PREDICTION LIST       │
  └──────────────────────────────────────────────┘
                           │
                           ▼
                      ┌─────────┐
                      │   END   │
                      └─────────┘
```

# FIG. 4

| inter_pred_idc | name of inter_pred_idc | |
|---|---|---|
| | ( nPbW + nPbH ) != 12 | ( nPbW + nPbH ) == 12 |
| 0 | PRED_L0 | PRED_L0 |
| 1 | PRED_L1 | PRED_L1 |
| 2 | PRED_B1 | na |

45

# FIG. 5

100

| MAXIMUM CODING UNIT SPLITTER | CODING UNIT DETERMINER | OUTPUT UNIT |
|---|---|---|
| 110 | 120 | 130 |

# FIG. 6

200

| RECEIVER | IMAGE DATA AND ENCODING INFORMATION EXTRACTOR | IMAGE DATA DECODER |
|---|---|---|
| 210 | 220 | 230 |

# FIG. 7

64
64 | 64×64

64
32 | 64×32

32
64 | 32×64

32
32 | 32×32

32
32 | 32×32

32
16 | 32×16

16
32 | 16×32

16
16 | 16×16

16
16 | 16×16

16
8 | 16×8

8
16 | 8×16

8
8 | 8×8

8
8 | 8×8

8
4 | 8×4

4
8 | 4×8

4
4 | 4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335 325

## FIG. 8

EP 2 887 650 A1

# FIG. 9

500

505     510     520     530     540

BITSTREAM → | PARSER | → | ENTROPY DECODER | → | DEQUANTIZER | → | INVERSE TRANSFORMER |

595     580     570     550

RECONSTRUCTED FRAME ← | SAO OPERATOR | ← | DEBLOCKING FILTER | ← | INTRA PREDICTOR | ← INTRA

560

REFERENCE FRAME → | MOTION COMPENSATOR | ← INTER

585

EP 2 887 650 A1

# FIG. 10

600

MAXIMUM HEIGHT AND
LCU   MAXIMUM  WIDTH OF
CODING UNIT=64          MAXIMUM DEPTH =3

PREDICTION
UNIT/
PARTITION

MINIMUM
CODING
UNIT

DEEPER CODING UNIT

# FIG. 11

CODING UNIT (710)
64

64×64

TRANSFORMATION
UNIT (720)
32

32×32

# FIG. 12

PARTITION TYPE (800)

2N 802
2N
2N

2N 804
N
0
1

N 806
2N
0 1

N 808
N
0 1
2 3

PREDICTION MODE (810)

812
INTRA MODE

814
INTER MODE

816
SKIP MODE

SIZE OF TRANSFORMATION UNIT (820)

822   824
INTRA

826   828
INTER

**FIG. 13**

FIG. 14

CODING UNIT (1010)

FIG. 15

PREDICTION UNIT (1060)

# FIG. 16

1014

1016

1022

1032

1048

1054

TRANSFORMATION UNIT (1070)

1050    1052

# FIG. 17

CU
1300

1302  1312 | 1314
      1316 | 1318
1304  1306

PU

2Nx2N 1322
2NxN 1324
Nx2N 1326
NxN 1328
2NxnU 1332
2NxnD 1334
nLx2N 1336
nRx2N 1338

TU

TU size flag=0  1342
TU size flag=1  1344

TU size flag=0  1352
TU size flag=1  1354

FIG. 18

Se

Tr

DISC (26000)

FIG. 19

26700

26800

26000

# FIG. 20

STREAMING
SERVER (11300)

NTERNET
(11100)

INTERNET SERVICE
PROVIDER (11200)

COMMUNICATION
NETWORK
(11400)

(11700)

(11800)

(11900)

(12000)

COMPUTER (12100)

CAMERA
(12600)

PDA (12200)

VIDEO CAMERA (12300)

MOBILE PHONE
(12500)

11000

EP 2 887 650 A1

# FIG. 21

12500

12530

12580

12510

12520

12560

12540

12550

12540

12570

# FIG. 22

**12520** DISPLAY SCREEN

**12620** LCD CONTROLLER

SYNCHRONIZATION BUS (12730)

**12700** POWER SUPPLY CIRCUIT

**12690** IMAGE DECODER

**12710** CENTRAL CONTROLLER

**12680** MULTIPLEXER/ DEMULTIPLEXER

**12510**

**12640** OPERATION INPUT CONTROLLER

**12540** OPERATION PANEL

**12570** STORAGE MEDIUM

**12670** RECORDER/READER

**12610** COMMUNICATION CIRCUIT

**12660** MODULATOR/ DEMODULATOR

**12720** IMAGE ENCODER

**12630** CAMERA INTERFACE

**12530** CAMERA

**12550** MICROPHONE

**12650** SOUND PROCESSOR

**12580** SPEAKER

**12500**

# FIG. 23

BROADCASTING SATELLITE (12900)

12820

MONITOR (12840)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

12960

SET-TOP BOX (12870)

MONITOR (12880)

TV (12810)

12970 — SD

RECORDER (12950)

FIG. 24

14300

14800

14400

14000

14200

DATA COMMUNICATION NETWORK

CLOUD COMPUTING SERVER

CLOUD NETWORK

COMPUTING RESOURCE

14100

14500

USER DB

14600

14700

EP 2 887 650 A1

## INTERNATIONAL SEARCH REPORT

International application No.

**PCT/KR2013/005862**

**A. CLASSIFICATION OF SUBJECT MATTER**

***H04N 7/32(2006.01)i, H04N 7/36(2006.01)i***

According to International Patent Classification (IPC) or to both national classification and IPC

**B. FIELDS SEARCHED**

Minimum documentation searched (classification system followed by classification symbols)
H04N 7/32; H04N 7/24; H04N 13/00; H04N 7/26; H04N 7/36

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: inter prediction, mark, decoding, B slice, preference picture list, index

**C. DOCUMENTS CONSIDERED TO BE RELEVANT**

| Category* | Citation of document, with indication, where appropriate, of the relevant passages | Relevant to claim No. |
|---|---|---|
| A | KR 10-2009-0101500 A (LG ELECTRONICS INC.) 28 September 2009<br>See paragraphs [0081]-[0084]; figure 9; and claim 1. | 1-15 |
| A | JP 2006-324905 A (CANON INC.) 30 November 2006<br>See abstract; figure 8; and claim 1. | 1-15 |
| A | KR 10-2009-0099098 A (LG ELECTRONICS INC.) 21 September 2009<br>See paragraphs [0077]-[0105]; figure 1; and claim 1. | 1-15 |
| A | KR 10-2012-0027193 A (LG ELECTRONICS INC.) 21 March 2012<br>See paragraphs [0034]-[0070]; figure 2; and claim 1. | 1-15 |
| A | KR 10-2012-0065954 A (ELECTRONICS AND TELECOMMUNICATIONS RESEARCH INSTITUTE) 21 June 2012<br>See paragraphs [0074]-[0079]; figure 4; and claim 1. | 1-15 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 22 OCTOBER 2013 (22.10.2013) | **22 OCTOBER 2013 (22.10.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

International application No.

**PCT/KR2013/005862**

| Patent document cited in search report | Publication date | Patent family member | Publication date |
|---|---|---|---|
| KR 10-2009-0101500 A | 28/09/2009 | AU 2007-232607 A1 | 11/10/2007 |
| | | AU 2007-232607 B2 | 16/09/2010 |
| | | CA 2647735 A1 | 11/10/2007 |
| | | CA 2647735 C | 06/08/2013 |
| | | CN 101449585 A | 03/06/2009 |
| | | CN 101455082 A | 10/06/2009 |
| | | CN 101455082 B | 13/02/2013 |
| | | CN 101455084 A | 10/06/2009 |
| | | CN 101461242 A | 17/06/2009 |
| | | CN 101461242 B | 03/08/2011 |
| | | CN 101473655 A | 01/07/2009 |
| | | CN 101473655 B | 08/06/2011 |
| | | CN 101491095 A | 22/07/2009 |
| | | CN 101491095 B | 10/07/2013 |
| | | EP 2008460 A1 | 31/12/2008 |
| | | EP 2008461 A1 | 31/12/2008 |
| | | EP 2025170 A1 | 18/02/2009 |
| | | EP 2030450 A1 | 04/03/2009 |
| | | JP 05054092 B2 | 24/10/2012 |
| | | JP 05055353 B2 | 24/10/2012 |
| | | JP 05055354 B2 | 24/10/2012 |
| | | JP 05055355 B2 | 24/10/2012 |
| | | JP 05247677 B2 | 24/07/2013 |
| | | JP 2009-532930 A | 10/09/2009 |
| | | JP 2009-532931 A | 10/09/2009 |
| | | JP 2009-532932 A | 10/09/2009 |
| | | JP 2009-532933 A | 10/09/2009 |
| | | JP 2009-532934 A | 10/09/2009 |
| | | KR 10-0934671 B1 | 31/12/2009 |
| | | KR 10-0934672 B1 | 31/12/2009 |
| | | KR 10-0934674 B1 | 31/12/2009 |
| | | KR 10-0934675 B1 | 31/12/2009 |
| | | KR 10-0937431 B1 | 18/01/2010 |
| | | KR 10-0943911 B1 | 24/02/2010 |
| | | KR 10-0949974 B1 | 29/03/2010 |
| | | KR 10-0949975 B1 | 29/03/2010 |
| | | KR 10-0949976 B1 | 29/03/2010 |
| | | KR 10-0949977 B1 | 29/03/2010 |
| | | KR 10-0949978 B1 | 29/03/2010 |
| | | KR 10-0949979 B1 | 29/03/2010 |
| | | KR 10-0949980 B1 | 29/03/2010 |
| | | KR 10-0949981 B1 | 29/03/2010 |
| | | KR 10-0949982 B1 | 29/03/2010 |
| | | KR 10-0949983 B1 | 29/03/2010 |
| | | KR 10-0959536 B1 | 27/05/2010 |
| | | KR 10-0959537 B1 | 27/05/2010 |
| | | KR 10-0959538 B1 | 27/05/2010 |
| | | KR 10-0966567 B1 | 29/06/2010 |
| | | KR 10-0966568 B1 | 29/06/2010 |

Form PCT/ISA/210 (patent family annex) (July 2009)

INTERNATIONAL SEARCH REPORT
Information on patent family members

International application No.

**PCT/KR2013/005862**

| Patent document cited in search report | Publication date | Patent family member | Publication date |
|---|---|---|---|
| | | KR 10-0966569 B1 | 30/06/2010 |
| | | KR 10-0966570 B1 | 29/06/2010 |
| | | KR 10-0998912 B1 | 08/12/2010 |
| | | KR 10-2007-0098428 A | 05/10/2007 |
| | | KR 10-2007-0098429 A | 05/10/2007 |
| | | KR 10-2007-0098430 A | 05/10/2007 |
| | | KR 10-2007-0098437 A | 05/10/2007 |
| | | KR 10-2007-0111947 A | 22/11/2007 |
| | | KR 10-2007-0111968 A | 22/11/2007 |
| | | KR 10-2007-0111969 A | 22/11/2007 |
| | | KR 10-2007-0116527 A | 10/12/2007 |
| | | KR 10-2007-0120416 A | 24/12/2007 |
| | | KR 10-2008-0007069 A | 17/01/2008 |
| | | KR 10-2008-0007086 A | 17/01/2008 |
| | | KR 10-2008-0007177 A | 17/01/2008 |
| | | KR 10-2008-0008944 A | 24/01/2008 |
| | | KR 10-2008-0015713 A | 20/02/2008 |
| | | KR 10-2008-0015714 A | 20/02/2008 |
| | | KR 10-2008-0015746 A | 20/02/2008 |
| | | KR 10-2008-0015760 A | 20/02/2008 |
| | | KR 10-2008-0022055 A | 10/03/2008 |
| | | KR 10-2008-0022063 A | 10/03/2008 |
| | | KR 10-2008-0035429 A | 23/04/2008 |
| | | KR 10-2008-0036910 A | 29/04/2008 |
| | | KR 10-2008-0050349 A | 05/06/2008 |
| | | KR 10-2008-0055685 A | 19/06/2008 |
| | | KR 10-2008-0055686 A | 19/06/2008 |
| | | KR 10-2010-0074314 A | 01/07/2010 |
| | | US 2009-0279608 A1 | 12/11/2009 |
| | | US 2009-0296811 A1 | 03/12/2009 |
| | | US 2010-0020870 A1 | 28/01/2010 |
| | | US 2010-0026882 A1 | 04/02/2010 |
| | | US 2010-0026883 A1 | 04/02/2010 |
| | | US 2010-0026884 A1 | 04/02/2010 |
| | | US 2010-0027653 A1 | 04/02/2010 |
| | | US 2010-0027654 A1 | 04/02/2010 |
| | | US 2010-0027659 A1 | 04/02/2010 |
| | | US 2010-0027660 A1 | 04/02/2010 |
| | | US 2010-0027682 A1 | 04/02/2010 |
| | | US 2010-0046619 A1 | 25/02/2010 |
| | | US 2010-0074334 A1 | 25/03/2010 |
| | | US 2010-0080293 A1 | 01/04/2010 |
| | | US 2010-0086036 A1 | 08/04/2010 |
| | | US 2010-0091843 A1 | 15/04/2010 |
| | | US 2010-0091844 A1 | 15/04/2010 |
| | | US 2010-0091845 A1 | 15/04/2010 |
| | | US 2010-0091883 A1 | 15/04/2010 |
| | | US 2010-0091884 A1 | 15/04/2010 |
| | | US 2010-0091885 A1 | 15/04/2010 |
| | | US 2010-0091886 A1 | 15/04/2010 |

Form PCT/ISA/210 (patent family annex) (July 2009)

INTERNATIONAL SEARCH REPORT
Information on patent family members

International application No.

**PCT/KR2013/005862**

| Patent document cited in search report | Publication date | Patent family member | Publication date |
|---|---|---|---|
| | | US 2010-0104012 A1 | 29/04/2010 |
| | | US 2010-0104014 A1 | 29/04/2010 |
| | | US 2010-0111169 A1 | 06/05/2010 |
| | | US 2010-0111170 A1 | 06/05/2010 |
| | | US 2010-0111171 A1 | 06/05/2010 |
| | | US 2010-0111172 A1 | 06/05/2010 |
| | | US 2010-0111173 A1 | 06/05/2010 |
| | | US 2010-0111174 A1 | 06/05/2010 |
| | | US 2010-0128787 A1 | 27/05/2010 |
| | | US 2010-0150234 A1 | 17/06/2010 |
| | | US 2010-0150235 A1 | 17/06/2010 |
| | | US 2010-0150236 A1 | 17/06/2010 |
| | | US 2010-0158112 A1 | 24/06/2010 |
| | | US 2010-0158113 A1 | 24/06/2010 |
| | | US 2010-0158114 A1 | 24/06/2010 |
| | | US 2010-0158117 A1 | 24/06/2010 |
| | | US 2010-0158118 A1 | 24/06/2010 |
| | | US 2010-0177824 A1 | 15/07/2010 |
| | | US 2010-0202519 A1 | 12/08/2010 |
| | | US 2010-0202521 A1 | 12/08/2010 |
| | | US 2010-0215100 A1 | 26/08/2010 |
| | | US 2010-0260265 A1 | 14/10/2010 |
| | | US 2010-0316135 A1 | 16/12/2010 |
| | | US 2010-0316136 A1 | 16/12/2010 |
| | | US 2010-0316360 A1 | 16/12/2010 |
| | | US 2010-0316361 A1 | 16/12/2010 |
| | | US 2010-0316362 A1 | 16/12/2010 |
| | | US 7782943 B2 | 24/08/2010 |
| | | US 7782944 B2 | 24/08/2010 |
| | | US 7782945 B2 | 24/08/2010 |
| | | US 7782946 B2 | 24/08/2010 |
| | | US 7782947 B2 | 24/08/2010 |
| | | US 7782948 B2 | 24/08/2010 |
| | | US 7782949 B2 | 24/08/2010 |
| | | US 7782950 B2 | 24/08/2010 |
| | | US 8170108 B2 | 01/05/2012 |
| | | US 8325814 B2 | 04/12/2012 |
| | | US 8363732 B2 | 29/01/2013 |
| | | US 8411744 B2 | 02/04/2013 |
| | | US 8428130 B2 | 23/04/2013 |
| | | US 8432972 B2 | 30/04/2013 |
| | | US 8457207 B2 | 04/06/2013 |
| | | US 8472519 B2 | 25/06/2013 |
| | | US 8483273 B2 | 09/07/2013 |
| | | US 8526504 B2 | 03/09/2013 |
| | | US 8532178 B2 | 10/09/2013 |
| | | US 8532180 B2 | 10/09/2013 |
| | | US 8532181 B2 | 10/09/2013 |
| | | US 8532182 B2 | 10/09/2013 |
| | | US 8532183 B2 | 10/09/2013 |

Form PCT/ISA/210 (patent family annex) (July 2009)

INTERNATIONAL SEARCH REPORT
Information on patent family members

International application No.

**PCT/KR2013/005862**

| Patent document cited in search report | Publication date | Patent family member | Publication date |
|---|---|---|---|
| | | US 8532184 B2 | 10/09/2013 |
| | | WO 2007-114608 A1 | 11/10/2007 |
| | | WO 2007-114609 A1 | 11/10/2007 |
| | | WO 2007-114610 A1 | 11/10/2007 |
| | | WO 2007-114611 A1 | 11/10/2007 |
| | | WO 2007-114612 A1 | 11/10/2007 |
| | | WO 2007-148906 A1 | 27/12/2007 |
| | | WO 2007-148907 A1 | 27/12/2007 |
| | | WO 2007-148909 A1 | 27/12/2007 |
| | | WO 2008-023967 A1 | 28/02/2008 |
| | | WO 2008-023968 A1 | 28/02/2008 |
| JP 2006-324905 A | 30/11/2006 | JP 04596975 B2 | 15/12/2010 |
| KR 10-2009-0099098 A | 21/09/2009 | CN 101371571 A | 18/02/2009 |
| | | CN 101371571 B | 19/06/2013 |
| | | CN 101375593 A | 25/02/2009 |
| | | CN 101375594 A | 25/02/2009 |
| | | CN 101375594 B | 07/09/2011 |
| | | CN 101491096 A | 22/07/2009 |
| | | CN 101491096 B | 30/05/2012 |
| | | CN 101647279 A | 10/02/2010 |
| | | CN 101895744 A | 24/11/2010 |
| | | CN 101895744 B | 20/03/2013 |
| | | CN 101945277 A | 12/01/2011 |
| | | CN 101945277 B | 14/08/2013 |
| | | EP 1977593 A1 | 08/10/2008 |
| | | EP 1982517 A1 | 22/10/2008 |
| | | EP 1982518 A1 | 22/10/2008 |
| | | JP 05021739 B2 | 12/09/2012 |
| | | JP 05192393 B2 | 08/05/2013 |
| | | JP 05199123 B2 | 15/05/2013 |
| | | JP 05199124 B2 | 15/05/2013 |
| | | JP 05249242 B2 | 31/07/2013 |
| | | JP 2009-523355 A | 18/06/2009 |
| | | JP 2009-523356 A | 18/06/2009 |
| | | JP 2009-536793 A | 15/10/2009 |
| | | JP 2009-543508 A | 03/12/2009 |
| | | JP 2010-517409 A | 20/05/2010 |
| | | KR 10-0934676 B1 | 31/12/2009 |
| | | KR 10-0943912 B1 | 03/03/2010 |
| | | KR 10-0943913 B1 | 03/03/2010 |
| | | KR 10-0943914 B1 | 03/03/2010 |
| | | KR 10-0943915 B1 | 03/03/2010 |
| | | KR 10-0947234 B1 | 12/03/2010 |
| | | KR 10-0953646 B1 | 21/04/2010 |
| | | KR 10-1276847 B1 | 18/06/2013 |
| | | KR 10-2007-0075354 A | 18/07/2007 |

INTERNATIONAL SEARCH REPORT
Information on patent family members

International application No.

**PCT/KR2013/005862**

| Patent document cited in search report | Publication date | Patent family member | Publication date |
|---|---|---|---|
| | | KR 10-2007-0076356 A | 24/07/2007 |
| | | KR 10-2007-0076357 A | 24/07/2007 |
| | | KR 10-2007-0076391 A | 24/07/2007 |
| | | KR 10-2007-0076392 A | 24/07/2007 |
| | | KR 10-2008-0006494 A | 16/01/2008 |
| | | KR 10-2008-0006495 A | 16/01/2008 |
| | | KR 10-2008-0029788 A | 03/04/2008 |
| | | KR 10-2008-0029944 A | 03/04/2008 |
| | | KR 10-2009-0046826 A | 11/05/2009 |
| | | KR 10-2009-0113281 A | 29/10/2009 |
| | | TW 200822755 A | 16/05/2008 |
| | | TW 200826683 A | 16/06/2008 |
| | | TW 200845767 A | 16/11/2008 |
| | | TW I344791 B | 01/07/2011 |
| | | TW I344792 B | 01/07/2011 |
| | | TW I355205 B | 21/12/2011 |
| | | US 2007-0177671 A1 | 02/08/2007 |
| | | US 2007-0177672 A1 | 02/08/2007 |
| | | US 2007-0177673 A1 | 02/08/2007 |
| | | US 2007-0177674 A1 | 02/08/2007 |
| | | US 2007-0177810 A1 | 02/08/2007 |
| | | US 2007-0177811 A1 | 02/08/2007 |
| | | US 2007-0177812 A1 | 02/08/2007 |
| | | US 2007-0177813 A1 | 02/08/2007 |
| | | US 2009-0290643 A1 | 26/11/2009 |
| | | US 2009-0310676 A1 | 17/12/2009 |
| | | US 2010-0091858 A1 | 15/04/2010 |
| | | US 2012-0121015 A1 | 17/05/2012 |
| | | US 7817865 B2 | 19/10/2010 |
| | | US 7817866 B2 | 19/10/2010 |
| | | US 7831102 B2 | 09/11/2010 |
| | | US 7856148 B2 | 21/12/2010 |
| | | US 7970221 B2 | 28/06/2011 |
| | | US 8115804 B2 | 14/02/2012 |
| | | US 8154585 B2 | 10/04/2012 |
| | | WO 2007-081176 A1 | 19/07/2007 |
| | | WO 2007-081177 A1 | 19/07/2007 |
| | | WO 2007-081178 A1 | 19/07/2007 |
| | | WO 2008-007913 A1 | 17/01/2008 |
| | | WO 2008-007917 A1 | 17/01/2008 |
| | | WO 2008-091117 A1 | 31/07/2008 |
| KR 10-2012-0027193 A | 21/03/2012 | EP 2421264 A1 | 22/02/2012 |
| | | US 2012-0147137 A1 | 14/06/2012 |
| | | WO 2010-120033 A1 | 21/10/2010 |
| KR 10-2012-0065954 A | 21/06/2012 | WO 2012-081894 A1 | 21/06/2012 |

Form PCT/ISA/210 (patent family annex) (July 2009)